(19)

Europäisches
Patentamt
European
Patent Office
Office européen
des brevets

(11) **EP 4 468 210 A1**

(12) **EUROPEAN PATENT APPLICATION**

(43) Date of publication:
**27.11.2024 Bulletin 2024/48**

(21) Application number: **24173846.7**

(22) Date of filing: **02.05.2024**

(51) International Patent Classification (IPC):
**G06N 5/01** *(2023.01)* **G06N 7/01** *(2023.01)*
**G06N 10/60** *(2022.01)*

(52) Cooperative Patent Classification (CPC):
**G06N 5/01; G06N 7/01;** G06N 10/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 JP 2023080206**

(71) Applicant: **Fujitsu Limited
Kawasaki-shi, Kanagawa 211-8588 (JP)**

(72) Inventors:
• **ANAZAWA, Toshihisa
Kawasaki-shi, Kanagawa, 211-8588 (JP)**
• **SHIMOKAWA, Satoshi
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **INFORMATION PROCESSING SYSTEM, INFORMATION PROCESSING METHOD, AND PROGRAM**

(57) An information processing system configured to calculate a combinatorial optimization problem that includes a constraint condition based on an energy function of an Ising model represented by a sum of a cost term and a constraint term that corresponds to the constraint condition, the information processing system including: a processing unit configured to obtain problem information of the combinatorial optimization problem, calculate, based on the problem information, an expected value of a change amount of the cost term when transition from a solution that satisfies the constraint condition to a solution that does not satisfy the constraint condition occurs, determine a coefficient of the constraint term based on the expected value, and output information of the energy function using the determined coefficient; and a search unit configured to search for a ground state of the Ising model based on the output information.

FIG. 1

**Description**

FIELD

The embodiments discussed herein are related to an information processing system, an information processing method, and a program.

BACKGROUND

There is an Ising machine (also referred to as a Boltzmann machine) that calculates a multivariable combinatorial optimization problem, which a von Neumann computer is not good at, by replacing the combinatorial optimization problem with an Ising model, which is a model representing the behavior of spins in a magnetic material. Examples of a method for solving the problem replaced with the Ising model in a practical time include a simulated annealing (SA) method and a Markov chain Monte Carlo (MCMC) method such as a replica exchange method. The combinatorial optimization problem is formulated with an energy function including a plurality of state variables. For example, an information processing device searches for a ground state of the Ising model that minimizes a value of the energy function by repeatedly trying state transitions caused by values of the state variables being changed using the MCMC method. The ground state corresponds to an optimal solution of the combinatorial optimization problem.

The energy function may be expressed by a sum of a cost term and a constraint term. The energy function ($E(x)$) may be expressed by, for example, the following equation (1).

[Math. 1]

$$E(\mathbf{x}) = C(\mathbf{x}) + \alpha P(\mathbf{x}) \qquad (1)$$

In the equation (1), x represents a vector based on a state variable that is a binary variable of $x = (x_1, x_2, ..., x_n)$. $C(x)$ is a cost term, which is an objective function to be minimized. $aP(x)$ is a constraint term. $P(x) = 0$ holds when the combinatorial optimization problem satisfies a constraint condition to be satisfied (at a time of constraint satisfaction), and $P(x) > 0$ holds when the constraint condition is not satisfied (at a time of constraint violation). $\alpha$ represents a constraint coefficient, which has a value larger than 0. By adding such a constraint term to the cost term, it becomes difficult to select a solution that does not satisfy the constraint condition (constraint violation solution).

Note that the state of the Ising model that maximizes the value of the energy function may be searched for if the sign of the energy function is changed.

Examples of a practical problem of the combinatorial optimization problem include a quadratic assignment problem (QAP). The QAP is a problem that obtains, when n allocation elements (facilities, etc.) are allocated to n allocation destinations (places, etc.), allocation that minimizes a sum of products of flow amounts (costs such as transportation amounts of supplies between the facilities) between the allocation elements and distances between the allocation destinations to which the individual allocation elements are allocated. The flow amounts between the allocation elements and the distances between the individual allocation destinations may be each expressed using a matrix. Furthermore, a constraint condition that all allocation elements are allocated to allocation destinations different from each other is imposed on the QAP.

Meanwhile, a constraint violation solution is likely to be generated when the constraint coefficient as described above (o in the case of equation (1)) is too small, whereas an energy barrier between constraint satisfaction solutions increases to hinder a solution space search when it is too large. Furthermore, an appropriate value of the constraint coefficient largely varies depending on the individual problem. Until now, a method of optimizing a constraint coefficient by repeating processing of adjusting the constraint coefficient based on a search result of a solution for a combinatorial optimization problem by an Ising machine has been proposed.

International Publication Pamphlet No. WO 2021-044516 and Japanese Laid-open Patent Publication No. 2004-110831 are disclosed as related art.

SUMMARY

TECHNICAL PROBLEM

However, according to the existing method, a large number of times of adjustment may be needed to obtain a constraint coefficient that enables a search in a wide range to obtain a high-quality solution, and it takes time to determine the constraint coefficient.

In one aspect, an object of the embodiments is to provide an information processing system, an information processing method, and a program capable of shortening a time needed to determine a constraint coefficient.

SOLUTION TO PROBLEM

According to an aspect of the embodiments, there is provided an information processing system configured to calculate a combinatorial optimization problem that includes a constraint condition based on an energy function of an Ising model represented by a sum of a cost term and a constraint term that corresponds to the constraint condition, the information processing system including: a processing unit configured to obtain problem information of the combinatorial optimization problem, calculate, based on the problem information, an expected value of a change amount of the cost term when transition from a solution that satisfies the constraint condition to a solution that does not satisfy the constraint condition occurs, determine a coefficient of the constraint term based on the expected value, and output information of the energy function using the determined coefficient; and a search unit configured to search for a ground state of the Ising model based on the output information.

ADVANTAGEOUS EFFECTS OF INVENTION

In one aspect, the embodiments may reduce a time needed to determine a constraint coefficient.

BRIEF DESCRIPTION OF DRAWINGS

FIG. 1 is a diagram illustrating an exemplary information processing system according to a first embodiment;
FIG. 2 is a diagram illustrating exemplary hardware of an information processing system according to a second embodiment;
FIG. 3 is a diagram illustrating exemplary functions of the information processing system;
FIG. 4 is a diagram illustrating an example of presence or absence of constraint violation and constraint violation energy in a QAP;
FIG. 5 is a diagram illustrating an exemplary relationship between a state and a value of an energy function;
FIG. 6 is a flowchart illustrating a flow of an exemplary process of the information processing system;
FIG. 7 is a diagram illustrating exemplary matrix expansion;
FIG. 8 is a diagram illustrating an exemplary change in an element $q_{ij}$ selected from $Q_{ij}$ in a certain allocation state;
FIG. 9 is a flowchart illustrating a flow of a process of an information processing system according to a comparative example;
FIG. 10 is a diagram illustrating a relationship between a value of a constraint coefficient and a calculation result of an instance according to the comparative example;
FIG. 11 is a diagram illustrating a relationship between a value of an adjustment coefficient and a calculation result of an instance according to the present embodiment;
FIG. 12 is a flowchart illustrating an exemplary flow of a process of determining the adjustment coefficient;
FIG. 13 is a diagram illustrating a relationship between a value of the adjustment coefficient and calculation results of the same type of instances having different problem sizes;
FIG. 14 is a diagram illustrating $x_{ik}x_{jk}$ added to a quadratic term and a linear term in an equation (16) by matrices;
FIG. 15 is a diagram illustrating $x_{ik}x_{il}$ added to a quadratic term and a linear term in an equation (17) by matrices;
FIG. 16 is a diagram illustrating an exemplary QUBO matrix of a constraint term;
FIG. 17 is a diagram illustrating an exemplary QUBO matrix of the entire energy function;
FIG. 18 is a flowchart illustrating a flow of an exemplary process of an information processing system according to a third embodiment;
FIG. 19 is a diagram illustrating exemplary allocation of elements of a small matrix $d_{kl}F$ to a small matrix $f_{ij}D$;
FIG. 20 is a flowchart illustrating an exemplary flow of matrix modulation; and
FIG. 21 is a diagram illustrating a relationship between a value of the adjustment coefficient and a calculation result of an instance in a case where the matrix modulation is used.

DESCRIPTION OF EMBODIMENTS

Hereinafter, modes for carrying out the embodiments will be described with reference to the drawings.

(Constraint Coefficient Determination Policy)

An energy function of an Ising model may be expressed by the equation (1) described above. Here, it is sufficient if a, which is a constraint coefficient, is set to a value that makes a constraint violation solution larger than a constraint satisfaction solution to avoid constraint violation. However, the constraint satisfaction solution has a range from an optimal solution in which a value of C(x) is minimized to a solution in which the value of C(x) is larger even if a constraint condition is satisfied, and it is not clear which value is suitable to be used as a reference. Furthermore, a value of the optimal solution is not clear in the first place. As described above, it has been proposed to optimize the constraint coefficient by repeating processing of adjusting the constraint coefficient based on a search result of a solution for a combinatorial optimization problem by an Ising machine, but the adjustment takes time. In view of the above, in the present embodiment, a is determined by focusing on a change amount of the value of C(x) at a time of transition from the constraint satisfaction solution to the constraint violation solution.

Note that, according to the MCMC method using a temperature parameter, a probability that the transition from the constraint satisfaction solution to the constraint violation solution with an increase in the value of C(x) is accepted is low although it depends on a setting of a value of the temperature parameter. Thus, hereinafter, a case where the value of C(x) decreases due to the transition from the constraint satisfaction solution to the constraint violation solution will be considered.

In the case where the value of C(x) decreases due to the transition from the constraint satisfaction solution to the constraint violation solution, E(x) of the equation (1) becomes smaller due to the transition if aP(x) added due to the constraint violation is smaller than the change amount (decrease amount) of C(x). Accordingly, the transition to the constraint violation solution is highly likely to occur. Thus, it is sufficient if aP(x) is set to a value that compensates for at least the decrease amount of C(x) to suppress the constraint violation. Next, a method of calculating an expected value of the decrease amount of C(x) will be described.

(Method of Calculating Expected Value of Decrease Amount of C(x))

When C(x) is expressed by quadratic unconstrained binary optimization (QUBO) in the equation (1), the following equation (2) is obtained.
[Math. 2]

$$C(\mathbf{x}) = \sum_{i<j} Q_{ij} x_i x_j + \sum_i h_i x_i + c \qquad (2)$$

In the equation (2), $Q_{ij}$ represents a coupling coefficient matrix, $h_i$ represents a bias coefficient vector, and c represents a constant term.

While the number of elements $q_{ij}$ (i < j) of $Q_{ij}$ is $n^2$ when the order of $Q_{ij}$ is assumed to be n, since $q_{ij} = q_{ji}$ and $q_{ii} = 0$ (i.e., diagonal elements are 0), the number of valid $q_{ij}$ is N = n(n - 1)/2. Hereinafter, the valid N $q_{ij}$ described above are set as elements (excluding diagonal elements) of an upper triangle of $Q_{ij}$, which is a coupling coefficient matrix, and are expressed as $q_s$ (s = 1, ..., N). A sum of $q_s$ may be expressed by the following equation (3), and an average value ($\mu_q$) of $q_s$ may be expressed by the following equation (4).
[Math. 3]

$$S = \sum_{s=1}^{N} q_s \qquad (3)$$

[Math. 4]

$$\mu_q = \frac{1}{N} S \qquad (4)$$

Furthermore, the number of elements of $h_i$ is n, and an average value ($\mu_h$) of $h_i$ may be expressed by the following equation (5).

[Math. 5]

$$\mu_h = \frac{1}{N} \sum_{i=1}^{n} h_i \qquad (5)$$

In the equation (2), $Q_{ij}x_ix_j$ has a value other than 0 in a case of $x_ix_j = 1$. That is, in the case of $x_ix_j = 1$, an element that intersects the i-column and the j-row of $Q_{ij}$ is selected. When the number of state variables of $x_i = 1$ is assumed to be p in $x_i$ (i = 1, ..., n) included in a certain solution x, the number of elements of $Q_{ij}$ to be selected is p(p - 1)/2.

In the equation (2), $h_ix_i$ has a value other than 0 in the case of $x_i = 1$. That is, in the case of $x_i = 1$, the elements of $h_i$ are selected. When the number of state variables of $x_i = 1$ is assumed to be p, the number of elements of $h_i$ to be selected is p.

When one of p $x_i$ having a value of 1 is inverted (deselected) from 1 to 0, the number of elements of $Q_{ij}$ to be deselected is p - 1, and the number of elements of $h_i$ to be deselected is 1. The sum of the deselected elements of $Q_{ij}$ and $h_i$ is the decrease amount of C(x).

Considering an attempt to extract an element from $q_s$ (s = 1, ..., N) described above, values X = $q_1$, ..., $q_N$ of the extracted element are random variables. However, the extraction of the deselected p - 1 elements described above is sampling without replacement, and the deselected p -1 elements exist in the same row or column of $Q_{ij}$, and moreover, the selection of $x_i$ to be inverted is not random but a function of x. Therefore, the random variable sequence $\{X_1, ..., X_{p-1}\}$ does not follow independent identical distribution.

However, the sampling without replacement may be approximately regarded as sampling with replacement in a case where n is larger. Furthermore, in the selection of $x_i$ to be inverted, solution by the Ising machine includes a stochastic process. In view of the above, assuming that X is a random variable following the independent identical distribution (iid) as approximation, an expected value of the sum S of the random variable sequence $\{X_1, ..., X_{p-1}\}$ including the deselected p - 1 elements is $\mu_{q(1 \to 0)}$ = (p - 1)$\mu_q$.

Likewise, an attempt to extract an element from a set of bias coefficients $\{h_s(s = 1, ..., N)\}$ is considered. Assuming that values Y = $h_1$, ..., $h_p$ of the extracted element are random variables following the iid, an expected value of the sum of the random variable sequence $\{Y_1\}$ (number of elements is 1 as described above) including the deselected element is $\mu_{h(1 \to 0)}$ = $\mu_h$.

From the above, the expected value of the decrease amount of C(x) is $\Delta^-C(x)$ = $\mu_{q(1 \to 0)}$ + $\mu_{h(1 \to 0)}$ = (p - 1)$\mu_q$ + $\mu_h$. When such $\Delta^-C(x)$ is used as the constraint coefficient $\alpha$, $\alpha P(x)$ added due to the constraint violation may be set to a value that compensates for the decrease amount of C(x) in the case where the value of C(x) decreases due to the transition from the constraint satisfaction solution to the constraint violation solution.

(Application to QAP)

In an objective function of a QAP, $h_i$ and c are identically 0, and thus C(x) may be expressed by the following equation (6).

[Math. 6]

$$C(\mathbf{x}) = \sum_{i<j} Q_{ij}x_ix_j \qquad (6)$$

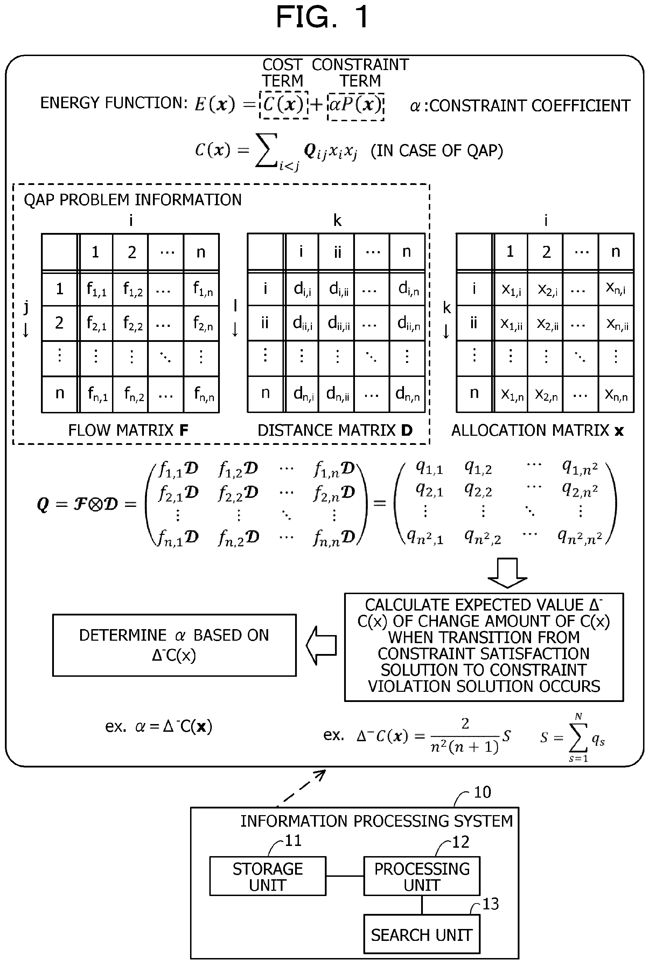

In the QAP, each of a flow amount between allocation elements and a distance between individual allocation destinations may be expressed using a matrix (see FIG. 1 to be described later). C(x) in a case where n allocation elements are allocated to n allocation destinations may be expressed by the following equation (7).

[Math. 7]

$$C(\mathbf{x}) = \sum_{i=1}^{n}\sum_{j=1}^{n}\sum_{k=1}^{n}\sum_{l=1}^{n} f_{ij}d_{kl}x_{ik}x_{jl} \qquad (7)$$

In the equation (7), $f_{ij}$ represents a flow amount of the i-column j-row of a flow matrix F representing the flow amount between the allocation elements (flow amount between the i-th allocation element and the j-th allocation element). A distance of the k-column l-row of a distance matrix D that represents a distance between allocation destinations (distance between the k-th allocation destination and the l-th allocation destination) is represented by $d_{kl}$. Allocation of the i-column k-row of an allocation matrix x (see FIG. 1 to be described later) representing an allocation state is represented by $x_{ik}$. In a case where the i-th allocation element is allocated to the k-th allocation destination, $x_{ik} = 1$ holds, and in a case where the i-th allocation element is not allocated to the k-th allocation destination, $x_{ik} = 0$ holds.

Note that P(x) in the equation (1) may be expressed as an equation (8) in the QAP.

[Math. 8]

$$P(\mathbf{x}) = \alpha \sum_{k=1}^{n} \left( 1 - \sum_{i=1}^{n} x_{ik} \right)^2 + \beta \sum_{i=1}^{n} \left( 1 - \sum_{k=1}^{n} x_{ik} \right)^2 \qquad (8)$$

The first term on the right side is a constraint term for making one i that satisfies $x_{ik} = 1$ with the same k, and indicates a constraint that one allocation element is allocated to one allocation destination. The second term on the right side is a constraint term for making one k that satisfies $x_{ik} = 1$ with the same i, and indicates a constraint that one allocation element is allocated to one allocation destination. While $\alpha \neq \beta$ may be satisfied, the flow matrix F and the distance matrix D are essentially symmetric matrices in the QAP, and thus $\beta = \alpha$ may be satisfied and the constraint term may be collectively expressed as aP(x).

$Q_{ij}$ in the equation (6) may be expressed by a matrix Q as in the following equation (9) based on a Kronecker product of the flow matrix F and the distance matrix D. The matrix Q includes $n \times n$ small matrices $f_{ij}D$.

[Math. 9]

$$\mathbf{Q} = \mathbf{F} \otimes \mathbf{D} = \begin{pmatrix} f_{1,1}\mathbf{D} & f_{1,2}\mathbf{D} & \dots & f_{1,n}\mathbf{D} \\ f_{2,1}\mathbf{D} & f_{2,2}\mathbf{D} & \dots & f_{2,n}\mathbf{D} \\ \vdots & \vdots & \ddots & \vdots \\ f_{n,1}\mathbf{D} & f_{n,2}\mathbf{D} & \dots & f_{n,n}\mathbf{D} \end{pmatrix} \qquad (9)$$

When the equation (9) is expanded, the matrix Q having the order of $n^2$ as indicated in an equation (10) is obtained.

[Math. 10]

$$\mathbf{Q} = \begin{pmatrix} q_{1,1} & q_{1,2} & \cdots & q_{1,n^2} \\ q_{2,1} & q_{2,2} & \cdots & q_{2,n^2} \\ \vdots & \vdots & \ddots & \vdots \\ q_{n^2,1} & q_{n^2,2} & \cdots & q_{n^2,n^2} \end{pmatrix} \qquad (10)$$

Furthermore, as in the following equation (11), the allocation matrix x may be expressed by a column vector having the number of elements of $n^2$.

[Math. 11]

$$\mathbf{x} = \begin{pmatrix} x_{1,i} \\ x_{1,ii} \\ \vdots \\ x_{1,n} \\ x_{2,i} \\ \vdots \\ x_{n,n} \end{pmatrix} = \begin{pmatrix} x_1 \\ x_2 \\ \vdots \\ x_{n^2} \end{pmatrix} \qquad (11)$$

While the number of elements $q_{ij}$ (i < j) in the matrix Q is $n^4$ as in the equation (10), since $q_{ij} = q_{ji}$ and $q_{ii} = 0$ (i.e., diagonal elements are 0), the number of valid $q_{ij}$ is $N = n^2(n^2 - 1)/2$. When the N valid $q_{ij}$ are set as elements (excluding diagonal elements) of an upper triangle of the matrix Q and expressed as $q_s$(s = 1, ..., N), the sum of $q_s$ may be expressed by the equation (3) described above, and the average value of $q_s$ may be expressed by the equation (4) described above.

While the expected value of the decrease amount of C(x) may be expressed as $\Delta$ C(x) = $\mu_{q(1\to0)}$ + $\mu_{h(1\to0)}$ = (p - 1)$\mu_q$ + $\mu_h$ as described above, $\mu_h$ = 0 holds in the case of the QAP. Furthermore, in the case of the QAP, the number p of $x_i$ that is 1 in the constraint satisfaction solution is p = n. Therefore, $\Delta^- C(x) = (p - 1)\mu_q = (n - 1)\mu_q = (n - 1)S/N = 2S/n^2(n + 1)$ holds for $\Delta^- C(x)$.

When such $\Delta$ C(x) is used as the constraint coefficient a, aP(x) added due to the constraint violation may be set to a value that compensates for the decrease amount of C(x) in the case where the value of C(x) decreases due to the transition from the constraint satisfaction solution to the constraint violation solution.

(Another Example of $\Delta^- C(x)$)

As expressed in the equation (9), the matrix Q includes n × n small matrices $f_{ij}D$. The number of small matrices not including the diagonal element ($f_{ij}D$ (i = j)) in the upper triangle of the matrix Q is n(n - 1)/2, and the number of elements not including the diagonal element ($f_{ij}d_{kl}$ (k = l)) in each of the small matrices is n(n - 1). In this case, the number of valid $q_{ij}$ (i < j) is $N' = n(n - 1) \times n(n-1)/2 = n^2(n - 1)^2/2$. When the valid N' $q_{ij}$ described above are expressed as $q_s$ (s = 1, ..., N'), a sum S' of $q_s$ may be expressed by the following equation (12).
[Math. 12]

$$S' = \sum_{s=1}^{N'} q_s \qquad (12)$$

Here, since a value of an invalid element of the matrix Q is 0 in the QAP, S' = S holds. Thus, the average value of $q_s$ may be expressed by the following equation (13).
[Math. 13]

$$\mu_q = \frac{1}{N'}S' = \frac{1}{N'}S \qquad (13)$$

Therefore, $\Delta^- C(x) = (n - 1)S/N' = 2(n - 1)S/n^2(n - 1)^2 = 2S/n^2(n - 1)$ holds for $\Delta^- C(x)$.

Even if such $\Delta^- C(x)$ is used as the constraint coefficient a, aP(x) added due to the constraint violation may be set to a value that compensates for the decrease amount of C(x) in the case where the value of C(x) decreases due to the transition from the constraint satisfaction solution to the constraint violation solution.

(First Embodiment)

FIG. 1 is a diagram illustrating an exemplary information processing system according to a first embodiment.
An information processing system 10 calculates a combinatorial optimization problem based on an energy function of an Ising model as expressed in the equation (1).

The information processing system 10 includes a storage unit 11, a processing unit 12, and a search unit 13.

The storage unit 11 may be a volatile storage device, such as a dynamic random access memory (DRAM) or the like, or may be a nonvolatile storage device, such as a hard disk drive (HDD), a flash memory, or the like. The storage unit 11 stores various types of data to be used for processing by the processing unit 12. Furthermore, the storage unit 11 stores problem information of the combinatorial optimization problem. For example, in a case where the optimization problem is a QAP, the problem information includes a flow amount between individual allocation elements and a distance between individual allocation destinations.

The processing unit 12 may include a central processing unit (CPU), a digital signal processor (DSP), an application specific integrated circuit (ASIC), a field programmable gate array (FPGA), and the like. The processing unit 12 may be a processor that executes a program. The "processor" may include a set of a plurality of processors (multiprocessor).

The processing unit 12 obtains the problem information of the combinatorial optimization problem, formulates the combinatorial optimization problem with the energy function based on the problem information, and outputs information regarding the energy function to the search unit 13. The processing unit 12 obtains a solution obtained by the search unit 13, and outputs the obtained solution to the outside. For example, the processing unit 12 may display the content of the solution on a display device coupled to the information processing system 10, or may transmit the solution to another information processing device via a network.

The search unit 13 receives the information regarding the energy function from the processing unit 12, and searches for, based on the information regarding the energy function, a ground state of the Ising model, that is, a solution that minimizes the value of the energy function. The search unit 13 outputs the solution obtained through the search to the processing unit 12. The search unit 13 may be implemented by dedicated hardware. For example, a search circuit implemented by using an integrated circuit such as an FPGA, an ASIC, a graphics processing unit (GPU), or the like may function as the search unit 13. However, the search unit 13 may be implemented by a processor executing a predetermined program. Examples of a search method used by the search unit 13 include an SA method, a replica exchange method, simulated quantum annealing (SQA), and the like.

Hereinafter, exemplary operation of the information processing system 10 according to the first embodiment will be described.

At a time of formulating the combinatorial optimization problem with the energy function, the processing unit 12 determines a value of a, which is a coefficient of a constraint term (constraint coefficient).

First, the processing unit 12 obtains (reads) the problem information of the combinatorial optimization problem stored in the storage unit 11. FIG. 1 illustrates an example of the problem information of the QAP.

The problem information of the QAP includes a flow amount between individual allocation elements and a distance between individual allocation destinations. The flow amount between the individual allocation elements is represented by a flow matrix F of n rows and n columns, and the distance between the individual allocation destinations is represented by a distance matrix D of n rows and n columns.

Note that FIG. 1 also illustrates an example of an allocation matrix x. Allocation of the i-column k-row of an allocation matrix x representing an allocation state is represented by $x_{ik}$. In a case where the i-th allocation element is allocated to the k-th allocation destination, $x_{ik} = 1$ holds, and in a case where the i-th allocation element is not allocated to the k-th allocation destination, $x_{ik} = 0$ holds. Note that the allocation matrix x may also be expressed by a column vector having the number of elements of $n^2$ as in the equation (11) described above.

The processing unit 12 calculates, based on the obtained problem information, an expected value of a change amount of a cost term in a case where transition from a solution that satisfies a constraint condition of the combinatorial optimization problem (constraint satisfaction solution) to a solution that does not satisfy the constraint condition (constraint violation solution) occurs.

In a case where the cost term is expressed as in the equation (2), the expected value of the change amount (decrease amount) may be calculated by an equation expressed as $\Delta^- C(x) = (p-1)\mu_q + \mu_h$ as described above (method of calculating the expected value of the decrease amount of $C(x)$). Note that, as described above, p is the number of state variables of $x_i = 1$ among n state variables $x_i$ (i = 1, ..., n) included in a certain solution. An average value of valid N elements $q_s$ (s = 1, ..., N) in $Q_{ij}$, which is a coupling coefficient matrix, is represented by $\mu_q$, and an average value of n elements of $h_i$ (bias coefficient vector) is represented by $\mu_h$.

A constraint satisfaction solution is stored in the storage unit 11 as an initial solution, and the processing unit 12 may determine a value of p based on the initial solution, or the value of p itself may be stored in the storage unit 11 in advance. Based on the problem information, $\mu_q$ and $\mu_h$ are calculated by the equations (3) to (5) described above. In a case where the combinatorial optimization problem is a traveling salesman problem (TSP) or the like, $\Delta^- C(x)$ may be calculated by $\Delta^- C(x) = (p - 1)\mu_q + \mu_h$ described above.

FIG. 1 illustrates exemplary calculation of $\Delta^- C(x)$ in the case where the combinatorial optimization problem is the QAP. The cost term $C(x)$ of the QAP may be expressed as the equation (6) described above. The processing unit 12 calculates a matrix Q by a Kronecker product of the flow matrix F and the distance matrix D as expressed in the equation (9) described above. Then, the processing unit 12 calculates $\Delta^- C(x)$ based on the average value $\mu_q$ of each element included in the matrix Q as expressed in the equation (10). Note that the equations (6), (9), and (10) are also illustrated in FIG. 1.

In the case of the QAP, as described above, it is sufficient if the average value of the valid elements that are the elements (excluding diagonal elements) of an upper triangle of the matrix Q is obtained. Since the number of valid elements is N = $n^2(n^2 - 1)/2$, S/N = $2S/n^2(n^2 - 1)$, which is obtained by dividing the sum S of the values of the valid elements by N, is the average value $\mu_q$. Moreover, since p = n holds in the case where the combinatorial optimization problem is the QAP, $\Delta^- C(x)$ = $2S/n^2(n + 1)$ holds.

Note that the processing unit 12 may calculate $\Delta^- C(x)$ by an equation expressed as $\Delta^- C(x)$ = $2S/n^2(n - 1)$ as described above (another example of $\Delta^- C(x)$).

Furthermore, as the problem size (n) of the QAP increases, n + 1 and n -1 included in the calculation equation of $\Delta^- C(x)$ become roughly equal, and also become roughly equal to n. Thus, even if n is used instead of n + 1 or n -1, the value of $\Delta^- C(x)$ is a roughly similar value. Therefore, the calculation equation of $\Delta^- C(x)$ described above may be appropriately changed according to the problem size.

The processing unit 12 determines the constraint coefficient $\alpha$ based on the calculated $\Delta^- C(x)$. For example, the processing unit 12 may determine $\alpha = \Delta^- C(x)$, or may determine a value obtained by multiplying $\Delta^- C(x)$ by an adjustment coefficient to be described later as a.

Thereafter, the processing unit 12 outputs information regarding the energy function obtained by formulating the combinatorial optimization problem using the determined o. The information regarding the energy function to be output is, for example, matrix data (also referred to as a QUBO matrix) in which the energy function of the equation (1) is expressed in a QUBO format.

The search by the search unit 13 is executed as follows, for example. As an example, a case of using the SA method or the replica exchange method is considered.

The search unit 13 calculates, for each of a plurality of state variables, a change amount of the value of the energy function due to a change in the value of one state variable of the plurality of state variables, and stochastically accepts it in a manner of giving a priority to a change in which the value of the energy function becomes smaller. At this time, with a steepest descent method, it is difficult to escape in a case of falling into a local solution. In view of the above, the search unit 13 uses a metropolis method or a Gibbs method to determine a transition probability of the Ising model from a certain state to the next state caused by a certain state variable being changed. That is, the search unit 13 stochastically allows a change in which the value of the energy function becomes larger according to a comparison between the change amount of the value of the energy function and a noise value. The noise value is obtained based on a value of a temperature parameter or a random number. The greater the value of the temperature parameter, the greater the amplitude of the noise value. The greater the amplitude of the noise value, the easier a state transition with a greater amount of increase in the value of the energy function is allowed.

The search unit 13 repeatedly tries the state transition based on such processing from the start of the search until a search end condition is satisfied, and obtains a set of values of the plurality of state variables when the search end condition is satisfied as a solution. For example, the search end condition is verified according to whether or not a predetermined unit time has elapsed, or whether or not the number of trials for the change in the state variable has reached a predetermined unit number of times, or the like.

As described above, the processing unit 12 of the information processing system 10 determines the constraint coefficient $\alpha$ based on the expected value $\Delta^- C(x)$ of the change amount of C(x) in the case where the transition from the constraint satisfaction solution to the constraint violation solution occurs. As a result, aP(x) added due to the constraint violation may be set to a value that compensates for the decrease amount of C(x) in the case where the value of C(x) decreases due to the transition from the constraint satisfaction solution to the constraint violation solution. Therefore, it becomes possible to suppress occurrence of a large number of times of adjustment to obtain an appropriate $\alpha$, and to shorten a time needed to determine the constraint coefficient.

(Second Embodiment)

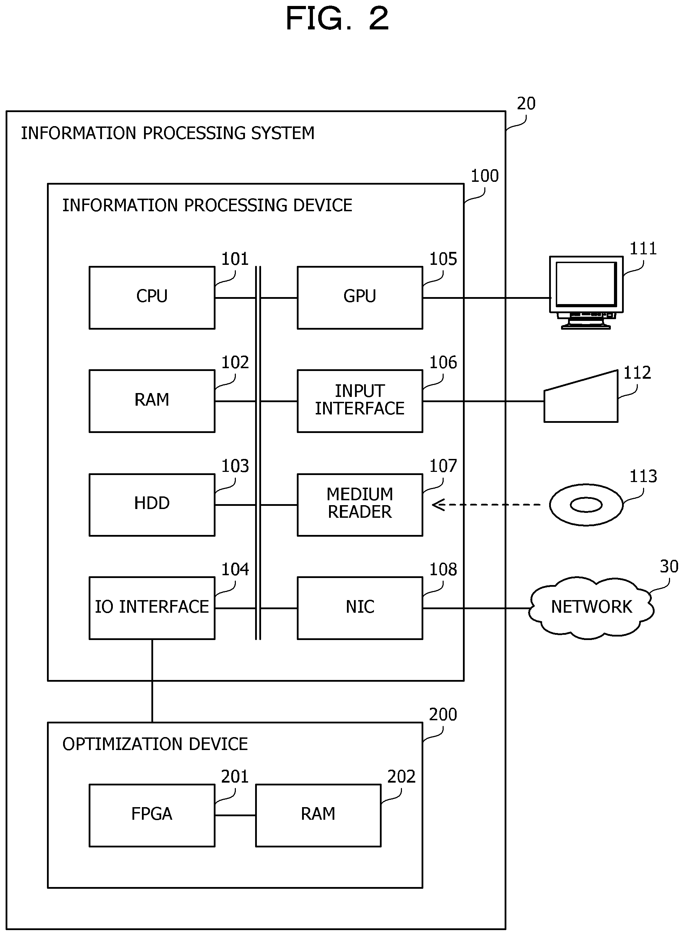

FIG. 2 is a diagram illustrating exemplary hardware of an information processing system according to a second embodiment.

An information processing system 20 includes an information processing device 100 and an optimization device 200.

The information processing device 100 generates information regarding an energy function corresponding to a combinatorial optimization problem by formulating the combinatorial optimization problem, and inputs the generated information regarding the energy function to the optimization device 200. In the second embodiment, a QAP is handled as an example of the combinatorial optimization problem to be calculated.

The information processing device 100 includes a CPU 101, a RAM 102, an HDD 103, an input/output (IO) interface 104, a GPU 105, an input interface 106, a medium reader 107, and a network interface card (NIC) 108. The CPU 101 is an example of the processing unit 12 according to the first embodiment. The RAM 102 is an example of the storage unit 11 according to the first embodiment.

The CPU 101 is a processor that executes program commands. The CPU 101 loads at least a part of a program and data stored in the HDD 103 into the RAM 102, and executes the program. Note that the CPU 101 may include a plurality of processor cores. Furthermore, the information processing device 100 may include a plurality of processors. A set of the plurality of processors will be sometimes referred to as a "multiprocessor" or simply a "processor".

The RAM 102 is a volatile semiconductor memory that temporarily stores a program to be executed by the CPU 101 and data to be used by the CPU 101 for operations. The RAM 102 is, for example, a DRAM. Note that the information processing device 100 may include a memory of a type different from the RAM 102, or may include a plurality of memories.

The HDD 103 is a nonvolatile storage device that stores programs of software, such as an operating system (OS), middleware, application software, and the like, and data. Note that the information processing device 100 may include another type of storage device, such as a flash memory, a solid state drive (SSD), or the like, and may include a plurality of nonvolatile storage devices.

The IO interface 104 is coupled to the optimization device 200, and inputs/outputs data to/from the optimization device 200 in accordance with an instruction from the CPU 101. For example, in response to an instruction from the CPU 101, the IO interface 104 writes data of the RAM 102 to a register or a memory of the optimization device 200 or reads data from the optimization device 200 and writes it to the RAM 102. For example, a peripheral component interconnect-express (PCI-e) or the like is used as the IO interface 104.

The GPU 105 outputs an image to a display 111 coupled to the information processing device 100 in accordance with the instruction from the CPU 101. As the display 111, any type of display, such as a cathode ray tube (CRT) display, a liquid crystal display (LCD), a plasma display, an organic electro-luminescence (OEL) display, or the like, may be used.

The input interface 106 obtains an input signal from an input device 112 coupled to the information processing device 100, and outputs it to the CPU 101. As the input device 112, a pointing device such as a mouse, a touch panel, a touch pad, a trackball, or the like, a keyboard, a remote controller, a button switch, or the like may be used. Furthermore, a plurality of types of input devices may be coupled to the information processing device 100.

The medium reader 107 is a reading device that reads a program and data recorded in a recording medium 113. As the recording medium 113, for example, a magnetic disk, an optical disk, a magneto-optical disk (MO), a semiconductor memory, or the like may be used. Examples of the magnetic disk include a flexible disk (FD) and an HDD. Examples of the optical disk include a compact disc (CD) and a digital versatile disc (DVD).

The medium reader 107 copies, for example, a program or data read from the recording medium 113 to another recording medium such as the RAM 102, the HDD 103, or the like. The read program is executed by, for example, the CPU 101. Note that the recording medium 113 may be a portable recording medium, and is sometimes used for distribution of a program and data. Furthermore, the recording medium 113 and the HDD 103 may be referred to as computer-readable recording media.

The NIC 108 is an interface that is coupled to a network 30 and communicates with another computer through the network 30. For example, the NIC 108 is coupled to a communication device, such as a switch, a router, or the like, with a cable.

The optimization device 200 is an accelerator that carried out, based on the information regarding the energy function, a ground state search by, for example, the SA method or an MCMC method such as the replica exchange method or the like by hardware. The optimization device 200 may be referred to as an Ising machine, a Boltzmann machine, or the like. The optimization device 200 includes an FPGA 201 and a RAM 202. The FPGA 201 implements a solution search function for a problem expressed by an Ising model. The solution search function by the optimization device 200 may be implemented by another type of integrated circuit such as an ASIC, a GPU, or the like. The RAM 202 is a memory that stores various types of data used for the solution search by the FPGA 201. The RAM 202 is, for example, a static RAM (SRAM).

Note that the optimization device 200 may be hardware that carries out the ground state search by a quantum annealing method. Furthermore, a function of a search unit that uses, for example, the SA method, the replica exchange method, an SQA method, or the like may be implemented by, instead of the optimization device 200, the CPU 101 included in the information processing device 100 or another processor executing predetermined software.

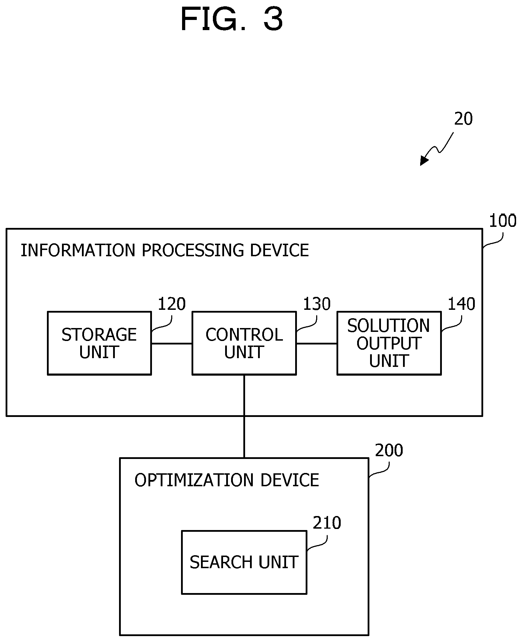

FIG. 3 is a diagram illustrating exemplary functions of the information processing system.

The information processing device 100 includes a storage unit 120, a control unit 130, and a solution output unit 140. A storage area of the RAM 102 or the HDD 103 is used as the storage unit 120. The control unit 130 and the solution output unit 140 are implemented by the CPU 101 executing a program stored in the RAM 102.

Furthermore, the optimization device 200 includes a search unit 210. The search unit 210 is implemented by the FPGA 201.

The storage unit 120 stores various types of data used for formulation of the QAP by the control unit 130. For example, the storage unit 120 stores information regarding a flow matrix F and a distance matrix D in the QAP, and information regarding a matrix Q (see FIG. 1 described above) obtained by a Kronecker product of the flow matrix F and the distance matrix D.

The control unit 130 receives an input of data of the QAP, and formulates the QAP based on the data. The control unit 130 generates information regarding the energy function expressing the equation (1) in a QUBO format. The control unit 130 outputs the generated information regarding the energy function to the optimization device 200, and causes the optimization device 200 to search for a solution based on the energy function.

The control unit 130 obtains the solution obtained through the search by the optimization device 200, and outputs the obtained solution to the solution output unit 140 in a case where the obtained solution, which satisfies the constraint, is to be output as a final solution.

The solution output unit 140 obtains the solution obtained through the search by the optimization device 200, and outputs the obtained solution. For example, the solution output unit 140 may convert the solution obtained from the optimization device 200 into a solution format for the QAP and cause the display 111 to display it, or may transmit information regarding the solution to another computer via the network 30.

The search unit 210 obtains the information regarding the energy function output from the control unit 130, and searches for a ground state of the Ising model, that is, an optimal solution, based on the energy function. The search unit 210 outputs the solution obtained through the search to the information processing device 100.

(Correspondence Relationship between Presence or Absence of Constraint Violation and Energy Function in QAP)

The energy function of the QAP includes a constraint term as expressed in the equation (8). Constraint conditions are, for example, "at one position, one facility is placed" and "one facility is placed at one position" in a facility placement problem, which is an example of the QAP. Thus, the search in the search unit 210 is affected by the constraint term.

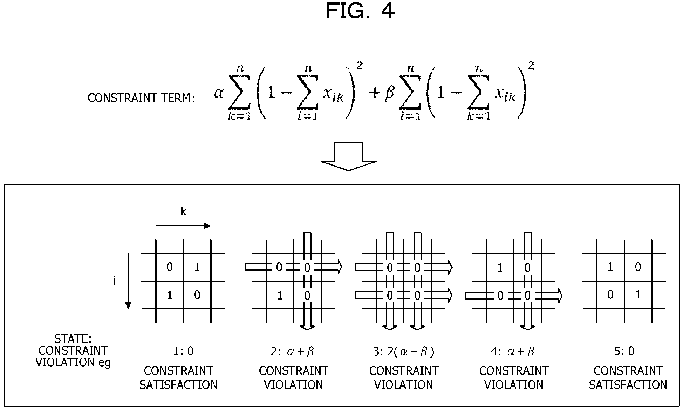

FIG. 4 is a diagram illustrating an example of presence or absence of constraint violation and constraint violation energy in the QAP.

FIG. 4 illustrates the constraint term expressed in the equation (8). Furthermore, in FIG. 4, for example, a part of the allocation matrix x illustrated in FIG. 1 is exemplified, and constraint violation energy (constraint violation eg) corresponding to each state is illustrated in a form of "state: constraint violation eg". The constraint violation eg is a penalty value associated with the constraint violation, which is added to the cost term, and is calculated based on the equation (8). Furthermore, in FIG. 4, it is assumed that a certain state is represented by a number indicating the state.

For example, the state "1" is $\{x_{ik}\} = (x_{11}, x_{12}, x_{21}, x_{22}) = (0, 1, 1, 0)$. The state "1" does not violate the constraint condition, that is, a state of constraint satisfaction. Thus, the constraint violation eg corresponding to the state "1" is "0".

The state "2" is $\{x_{ik}\} = (x_{11}, x_{12}, x_{21}, x_{22}) = (0, 0, 1, 0)$. The state "2" violates the constraint condition. The constraint violation eg corresponding to the state "2" is "$\alpha + \beta$".

The state "3" is $\{x_{ik}\} = (x_{11}, x_{12}, x_{21}, x_{22}) = (0, 0, 0, 0)$. The state "3" violates the constraint condition. The constraint violation eg corresponding to the state "3" is "$2(\alpha + \beta)$".

The state "4" is $\{x_{ik}\} = (x_{11}, x_{12}, x_{21}, x_{22}) = (1, 0, 0, 0)$. The state "4" violates the constraint condition. The constraint violation eg corresponding to the state "4" is "$\alpha + \beta$".

The state "5" is $\{x_{ik}\} = (x_{11}, x_{12}, x_{21}, x_{22}) = (1, 0, 0, 1)$. The state "5" does not violate the constraint condition, that is, a state of constraint satisfaction. Thus, the constraint violation eg corresponding to the state "5" is "0".

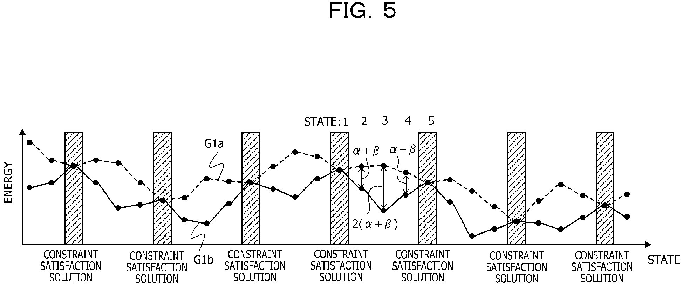

FIG. 5 is a diagram illustrating an exemplary relationship between a state and a value of the energy function.

In FIG. 5, a state of the Ising model is illustrated in one dimension for convenience. In FIG. 5, the horizontal axis represents a state of the Ising model, and the vertical axis represents energy. The energy represents a value of the cost term or a value of the energy function (including the constraint term). A sequence G1a is a sequence indicating a relationship between a state and a value of the energy function with respect to a certain problem. A sequence G1b is a sequence indicating a relationship between a state and a value of the cost term with respect to the problem.

Furthermore, in FIG. 5, a difference in energy between the sequences G1a and G1b in the states corresponding to the states "1" to "5" illustrated in FIG. 4 is illustrated.

Since the state "1" is the state of constraint satisfaction (constraint satisfaction solution) and the constraint violation eg described above is "0", the energy of the sequences G1a and G1b coincides with each other.

Since the states "2" and "4" are the state of constraint violation and the constraint violation eg described above is "a + $\beta$", the energy of the sequence G1a is higher than the energy of the sequence G1b by "a + $\beta$".

Since the state "3" is also the state of constraint violation and the constraint violation eg described above is "$2(\alpha + \beta)$", the energy of the sequence G1a is higher than the energy of the sequence G1b by "$2(\alpha + \beta)$".

As illustrated in FIG. 5, in a state as in the states "2" to "4", the value of the cost term represented by the sequence G1b is smaller than that in the state "1" or "5", which is the constraint satisfaction solution, despite the occurrence of the constraint violation. Thus, in a case where there is no constraint term, transition to such states "2" to "4" is likely to occur.

Therefore, it is preferable to determine the constraint coefficients $\alpha$ and $\beta$ having appropriate magnitude. A constraint violation solution is likely to be generated when $\alpha$ and $\beta$ are too small, whereas an energy barrier between constraint satisfaction solutions increases to hinder a solution space search when they are too large.

Thus, in a similar manner to the processing unit 12 of the information processing system 10 in FIG. 1, the control unit 130 of the information processing device 100 determines the constraint coefficient $\alpha$ based on the expected value $\Delta^-C(x)$ of the change amount of C(x) in the case where the transition from the constraint satisfaction solution to the constraint violation solution occurs. Note that $\beta = \alpha$ is assumed to be satisfied.

In the case of the QAP, for example, by setting $\alpha = \Delta^-C(x) = 2S/n^2(n + 1)$ as described above, the constraint term added due to the constraint violation may be set to a value that compensates for the decrease amount of C(x).

Next, a processing procedure of the information processing system 20 will be described.

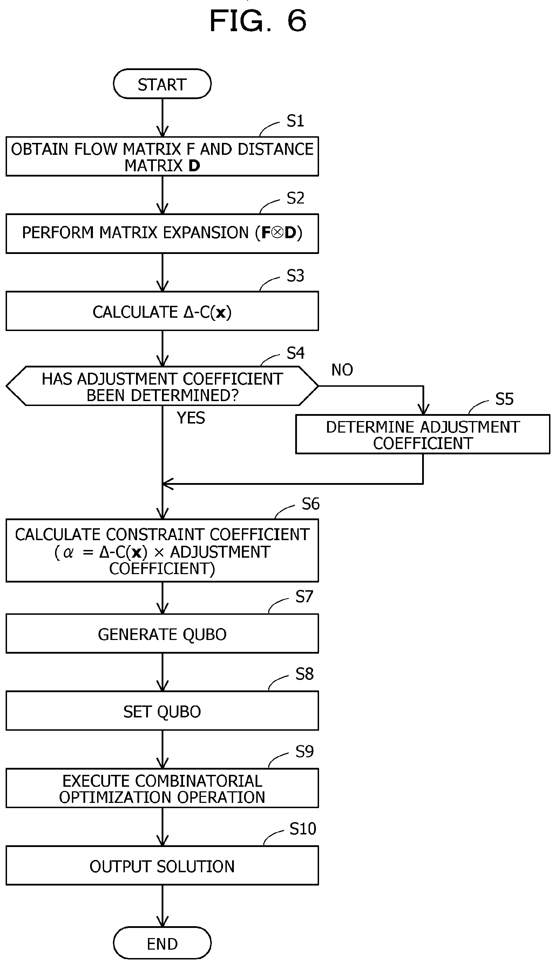

FIG. 6 is a flowchart illustrating a flow of an exemplary process of the information processing system.

The control unit 130 obtains the flow matrix F and the distance matrix D from the data of the QAP input by a user (step S1).

The control unit 130 performs matrix expansion (step S2). That is, the control unit 130 calculates a Kronecker product of the flow matrix F and the distance matrix D to generate a matrix $Q_{ij}$.

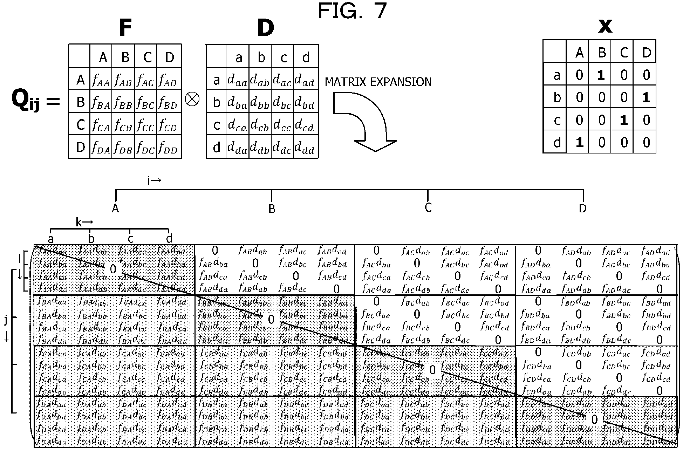

FIG. 7 is a diagram illustrating an example of the matrix expansion.

FIG. 7 illustrates exemplary generation of $Q_{ij}$ in a case where each of the flow matrix F and the distance matrix D is a matrix of four rows and four columns, that is, in a case of n = 4. $Q_{ij}$ is a matrix of 16 rows and 16 columns. Such a matrix is also referred to as a QUBO matrix of the cost term.

Allocation elements are represented by A to D, and allocation destinations are represented by a to d. Furthermore, FIG. 7 illustrates an example of the allocation matrix x of four rows and four columns. In the example of FIG. 7, an allocation element A is allocated to an allocation destination d, an allocation element B is allocated to an allocation destination a, an allocation element C is allocated to an allocation destination c, and an allocation element D is allocated to an allocation destination b.

The flow matrix F is a matrix in which flow amounts between the allocation elements A to D are arranged. For example, $f_{AB}$ represents a flow amount between the allocation elements A and B.

The distance matrix D is a matrix in which distances between the allocation destinations a to d are arranged. For example, $d_{ab}$ represents a distance between the allocation destinations a and b.

The matrix $Q_{ij}$ obtained by the Kronecker product of the flow matrix F and the distance matrix D includes 4 × 4 small matrices as illustrated in FIG. 7. A position of each of the small matrices is expressed by (column, row) = (i, j) of the matrix Q. Furthermore, a position of an element of the small matrices is expressed by (column, row) = (k, l) of the matrix Q.

A value of each element included in four diagonal small matrices of the matrix $Q_{ij}$ represented by a product of the flow amount (= 0) between the same allocation elements and each distance is 0. Furthermore, a value of diagonal elements of each of the small matrices represented by a product of a distance (= 0) between the same allocation destinations and each flow amount is 0.

Note that, since the small matrices included in the lower triangular portion of the matrix $Q_{ij}$ includes small matrices corresponding to the upper triangular portion, the information to be output to the search unit 210 only needs to include information regarding the small matrices corresponding to the upper triangular portion (excluding the four diagonal small matrices described above).

Next, the control unit 130 calculates $\Delta^-C(x)$ (step S3).

As described above, $\Delta^-C(x)$ represents an expected value of the decrease amount of C(x) in the case where the transition from the constraint satisfaction solution to the constraint violation solution occurs.

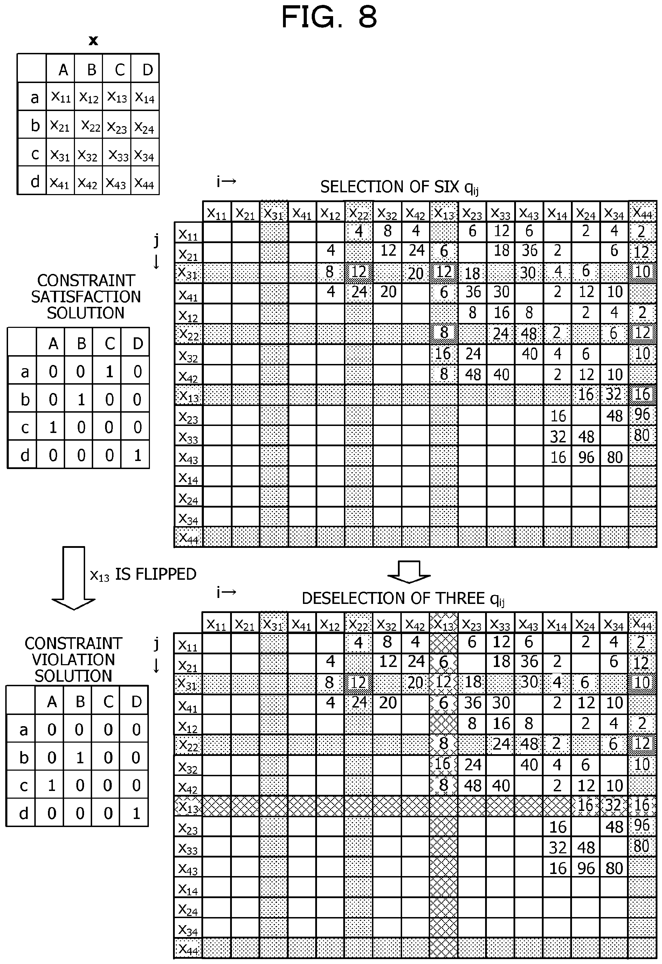

FIG. 8 is a diagram illustrating an exemplary change in an element $q_{ij}$ selected from $Q_{ij}$ in a certain allocation state.

At a time of calculating the cost term, the element $q_{ij}$ at a position where a row and a column of $Q_{ij}$ corresponding to the state variable having a value of 1 intersect is selected. FIG. 8 illustrates an exemplary case where values of $x_{13}$, $x_{22}$, $x_{31}$, and $x_{44}$ are 1. Since the number of state variables having a value of 1 in each row and each column is 1, the constraint condition of the QAP is satisfied, and a constraint satisfaction solution is obtained. In this case, six $q_{ij}$ at positions where rows and columns corresponding to those four state variables intersect are selected. Note that, here, the small matrices corresponding to the upper triangular portion of $Q_{ij}$ (excluding the four diagonal small matrices described above) are considered as described above.

In the example of FIG. 8, 140 obtained by adding 70 in consideration of the lower triangular portion to 12 + 12 + 10 + 8 + 12 + 16 = 70, which is the sum of the values of the six $q_{ij}$, is the value of C(x).

Here, in a case where $x_{13}$ is flipped (in a case where the value changes from 1 to 0), the number of state variables having a value of 1 in the first row of the allocation matrix x becomes 0. Thus, the constraint condition of the QAP is not satisfied, and a constraint violation solution is obtained. In this case, among the six $q_{ij}$ described above, three $q_{ij}$ having values of 12, 8, and 16 are deselected. Therefore, the decrease amount of C(x) is 36.

The expected value Δ C(x) of such decrease amount of C(x) may be calculated by, for example, an equation expressed as $\bar{\Delta}C(x) = 2S/n^2(n - 1)$ as described above.

Next, the control unit 130 determines whether or not an adjustment coefficient has been determined (step S4). The control unit 130 performs processing of step S6 if it is determined that the adjustment coefficient has been determined, and performs processing of step S5 if it is determined that the adjustment coefficient has not been determined.

In the processing of step S5, the control unit 130 determines the adjustment coefficient. The processing of the step S5 will be described later. After the processing of step S5, the control unit 130 performs the processing of step S6.

In the processing of step S6, the control unit 130 calculates a constraint coefficient $\alpha$ by multiplying $\bar{\Delta}C(x)$ by the adjustment coefficient.

Thereafter, the control unit 130 generates information regarding the energy function expressing the equation (1) in the QUBO format (step S7).

The control unit 130 sets the information regarding the energy function generated in step S7 in the search unit 210 (step S8).

The search unit 210 executes the combinatorial optimization operation based on the set information regarding the energy function. The search unit 210 searches for a solution for the QAP by the operation (step S9).

The search unit 210 outputs the solution obtained through the search to the control unit 130 (step S10).

The control unit 130 obtains the solution from the search unit 210, outputs it to the outside via the solution output unit 140, and terminates the process.

(Comparative Example)

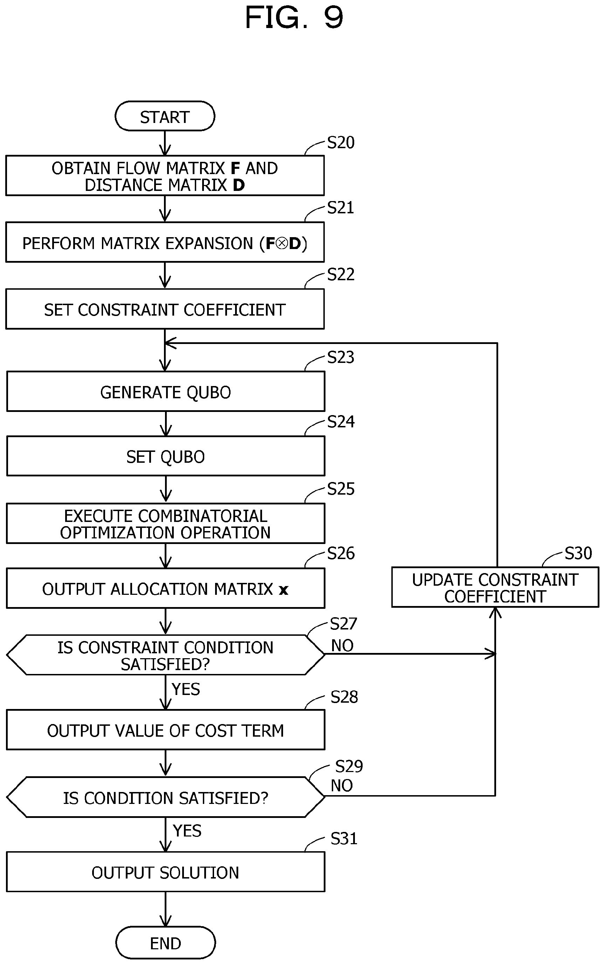

FIG. 9 is a flowchart illustrating a flow of a process of an information processing system according to a comparative example.

FIG. 9 illustrates a procedure of a process using a method of optimizing a constraint coefficient by repeating processing of adjusting the constraint coefficient based on a search result of a solution for a combinatorial optimization problem by an Ising machine as in the existing technique.

Processing of steps S20 and S21 is the same as the processing of steps S1 and S2 illustrated in FIG. 6.

In processing of step S22, an initial value (temporary value) of the constraint coefficient $\alpha$ is set. Thereafter, processing similar to that in steps S7 to S9 illustrated in FIG. 6 is performed (steps S23, S24, and S25), and the allocation matrix x obtained by the combinatorial optimization operation is output (step S26).

Then, it is determined whether or not the constraint condition of the QAP is satisfied based on the allocation matrix x (step S27). Processing of step S28 is performed if it is determined that the constraint condition is satisfied, and processing of step S30 is performed if it is determined that the constraint condition is not satisfied.

In the processing of step S28, the value of the cost term obtained by the combinatorial optimization operation is output.

Thereafter, it is determined whether or not the value of the cost term satisfies a predetermined condition (step S29), and processing of step S31 is performed if it is determined that the condition is satisfied, and processing of step S30 is performed if it is determined that the condition is not satisfied.

In the processing of step S30, the constraint coefficient $\alpha$ is updated. For example, adjustment of increasing the constraint coefficient is performed if a constraint satisfaction solution is not obtained, and adjustment of decreasing the constraint coefficient is performed if the value of the cost term is larger than a predetermined threshold. After the processing of step S30, the process from step S23 is repeated.

In the processing of step S31, processing similar to that of step S10 illustrated in FIG. 6 is performed.

Next, an exemplary case where various instances of the QAP are calculated using the method of the comparative example as described above will be described above.

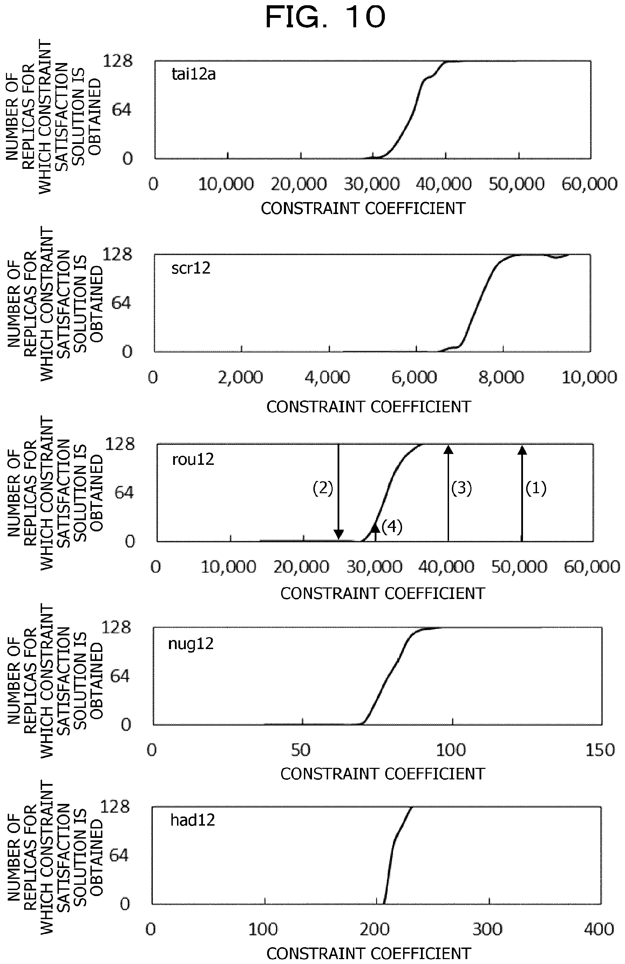

FIG. 10 is a diagram illustrating a relationship between a value of the constraint coefficient and a calculation result of an instance according to the comparative example. FIG. 10 illustrates an exemplary case where calculation is performed by changing the value of the constraint coefficient for five instances with a problem size n of n = 12 using the Ising machine that performs the replica exchange method. The five instances are tai12a, scr12, rou12, nug12, and had12 selected from a QAP library (QAPLIB). The horizontal axis represents a value of the constraint coefficient, and the vertical axis represents the number of replicas for which the constraint satisfaction solution is obtained among 128 replicas.

When the constraint coefficient is changed from a small value to a larger value, while only the constraint violation solution is obtained in the part where the constraint coefficient is small, the constraint satisfaction solution is obtained as the constraint coefficient increases in the calculation result for any instance. Ultimately, the constraint satisfaction solution is obtained for approximately all the replicas. As described above, while the constraint satisfaction solution may be almost reliably obtained when the constraint coefficient is sufficiently increased, commonly, a solution in which the value of the cost term is closer to the optimal solution (suboptimal solution: solution in which the value of the cost term is sufficiently closer to the value of the optimal solution) is obtained as the constraint coefficient is smaller. Thus, an appropriate value of the constraint coefficient is a value from a value at which the constraint satisfaction solution starts to be obtained to a value that is roughly a constraint satisfaction solution and in which a partial constraint violation solution remains (portion where the inclination of the graph is positive). As illustrated in FIG. 10, it may be seen that, even with the same problem size, the value of the constraint coefficient greatly varies from less than a hundred to tens of thousands depending on the instance.

For example, in the initial state of solution for rou12 (state before calculation of the relationship as illustrated in FIG. 10), an approximate number of the constraint coefficient is also unknown, and thus a value supposed to be sufficiently large is set as the initial value of the constraint coefficient. When the combinatorial optimization operation is performed with the initial value of the constraint coefficient set to, for example, (1) 50,000 as appropriate, the constraint satisfaction solution is obtained for all the 128 replicas, and it is found that 50,000 seems to be too large. Next, when 50,000 is reduced by half and (2) 25,000 is set as a value of the constraint coefficient to perform the combinatorial optimization operation (corresponding to the portion of returning to the processing of step S23 in FIG. 9), all the 128 replicas result in the constraint violation solution. Thus, it is found that the appropriate range of the value of the constraint coefficient (a) is 25,000 < a < 50,000. In view of the above, next, (3) 40,000 between 25,000 and 50,000 is set as a value of the constraint coefficient to perform the combinatorial optimization operation, for example. However, in that case, the constraint satisfaction solution is obtained for all the replicas, and thus it is found to be still too large. Subsequently, (4) 30,000 is set as a value of the constraint coefficient to perform the combinatorial optimization operation. In this case, the constraint satisfaction solution is obtained for some replicas, and it is found that the constraint coefficient is close to an appropriate value. Thereafter, the combinatorial optimization operation is performed using several values, such as a value between 30,000 and 40,000, a value slightly smaller than 30,000, and the like, and ultimately, for example, 29,500 is determined as an appropriate constraint coefficient. The operation above may also be incorporated as an algorithm.

Meanwhile, in a case of calculating nug12 and the like, assuming that the initial value of the constraint coefficient is 50,000, the constraint violation solution is obtained when it is changed to 50,000, 20,000, 10,000, 5,000, 2,000, 1,000, 500, 200, 100, and 50, for example. Thus, there are many useless attempts.

Although it is conceivable to optimize the constraint coefficient using Bayesian inference or the like instead of manual operation, there is no change in that many attempts are needed.

In contrast to the comparative example as described above, according to the information processing system 20 of the present embodiment that performs the process as illustrated in FIG. 6, the adjustment time of the constraint coefficient $\alpha$ may be shortened by determining the constraint coefficient $\alpha$ based on the calculated $\Delta^- C(x)$. Note that, while FIG. 6 includes step S5 for determining the adjustment coefficient, since a search range of an appropriate adjustment coefficient is limited, an increase in calculation time caused by the processing of step S5 is smaller than that in the case of the comparative example, as described below.

(Adjustment Coefficient Determination)

Next, determination of the adjustment coefficient will be described.

The instances in which the solution is performed by the Ising machine (represented using the QUBO matrix) have different "statistical properties" (average and variance of matrix elements, matrix sparseness and denseness, value distribution, etc.) depending on the problem. Thus, it is preferable to determine the constraint coefficient $\alpha$ by adjusting $\Delta C(x)$ according to the instance sequence.

Problems to be formulated as QAPs include not only allocation of factories to factory sites but also various things. For example, there are arrangement of hospital rooms and facilities in a hospital, gate arrangement for minimizing a total travel distance of transfer passengers at an airport, a printed board arrangement and wiring problem, key arrangement of a keyboard, table seating arrangement, turbine blade weight balance, and the like. The "statistical properties" are different in each of those problems.

Note that the QAPLIB is a library that abstracts such problems and is created as a series having a different size for each problem, and is used as a benchmark for solution accuracy and a solution speed.

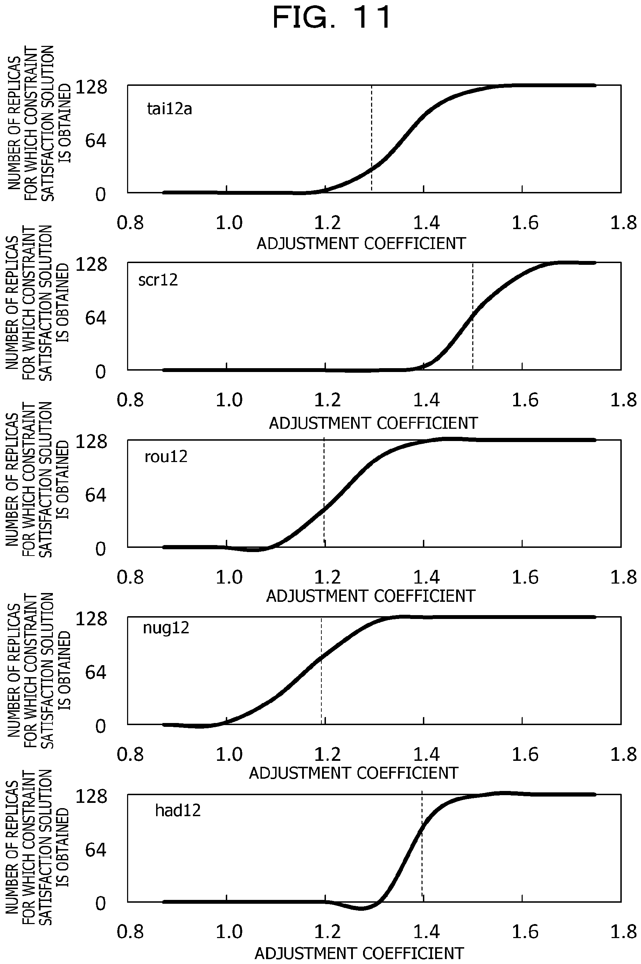

FIG. 11 is a diagram illustrating a relationship between a value of the adjustment coefficient and a calculation result of an instance according to the present embodiment. FIG. 11 illustrates an exemplary case where the information processing system 20 according to the second embodiment obtains the expected value $\Delta^- C(x)$ of the decrease amount of C(x) for the five instances with the problem size n of n = 12 and then performs calculation based on the replica exchange method by changing the value of the adjustment coefficient. The five instances are tai12a, scr12, rou12, nug12, and had12 selected from a QAPLIB. The horizontal axis represents a value of the adjustment coefficient, and the vertical axis represents the number of replicas for which the constraint satisfaction solution is obtained among the 128 replicas.

As compared with the case of the comparative example illustrated in FIG. 10, the variation in the appropriate value of the adjustment coefficient between the instances is significantly small. However, when viewed in detail, since the statistical properties are different in each of the instances, there is a difference of approximately several tens of percent in the appropriate adjustment coefficient (range in which the inclination of the graph is positive). Thus, in order for the information processing system 20 according to the second embodiment to obtain a better solution, it is preferable to determine an appropriate adjustment coefficient for each instance.

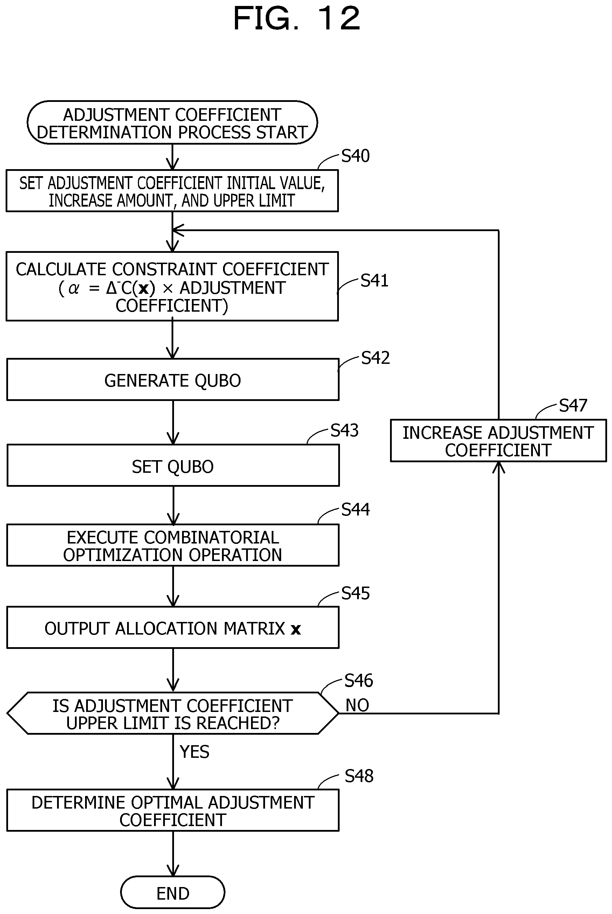

FIG. 12 is a flowchart illustrating an exemplary flow of a process of determining the adjustment coefficient.

First, an initial value, an increase amount, and an upper limit of the adjustment coefficient are set (step S40). In the processing of step S40, for example, the setting may be performed based on the initial value, the increase amount, or the upper limit input by the user, or the setting may be performed based on the initial value, the increase amount, or the upper limit stored in advance in the storage unit 120.

Thereafter, the control unit 130 and the search unit 210 perform processing of steps S41 to S44 similar to the processing of steps S6 to S9 illustrated in FIG. 6, and the allocation matrix x, which is the search result of the ground state of the Ising model, is output from the search unit 210 (step S45).

After the processing of the step S45, the control unit 130 determines whether or not the adjustment coefficient has reached the upper limit (step S46).

If it is determined that the adjustment coefficient has not reached the upper limit, the control unit 130 increases the adjustment coefficient by the increase amount (step S47), and repeats the process from step S41.

If it is determined that the adjustment coefficient has reached the upper limit, the control unit 130 determines an optimal adjustment coefficient based on the allocation matrix x, which is the search result obtained thus far (step S48), and terminates the process of determining the adjustment coefficient. For example, as illustrated in FIG. 11, the control unit 130 determines the adjustment coefficient within a range in which the number of replicas for which the constraint satisfaction solution is obtained increases according to a change in the adjustment coefficient (range in which the inclination is positive) based on the allocation matrix x obtained thus far, whereby an appropriate adjustment coefficient may be obtained.

The search range of an appropriate adjustment coefficient is limited to approximately $1 \times 10^0$, and moreover, it is sufficient if search increments (above-described increase amount of the adjustment coefficient) are set to approximately 0.05 to 0.1. Furthermore, the number of times of adjustment of the adjustment coefficient is determined by the initial value, increase amount, and upper limit set in the processing of step S40.

Thus, it may be expected that the number of times of adjustment of the adjustment coefficient is made significantly smaller than the number of times of updating the constraint coefficient $\alpha$ in the comparative example.

Moreover, once the adjustment coefficient is determined, the adjustment coefficient may be used at a time of executing the combinatorial optimization operation of the same type of instances, and thus the attempt to determine the adjustment coefficient only needs to be performed for the first time.

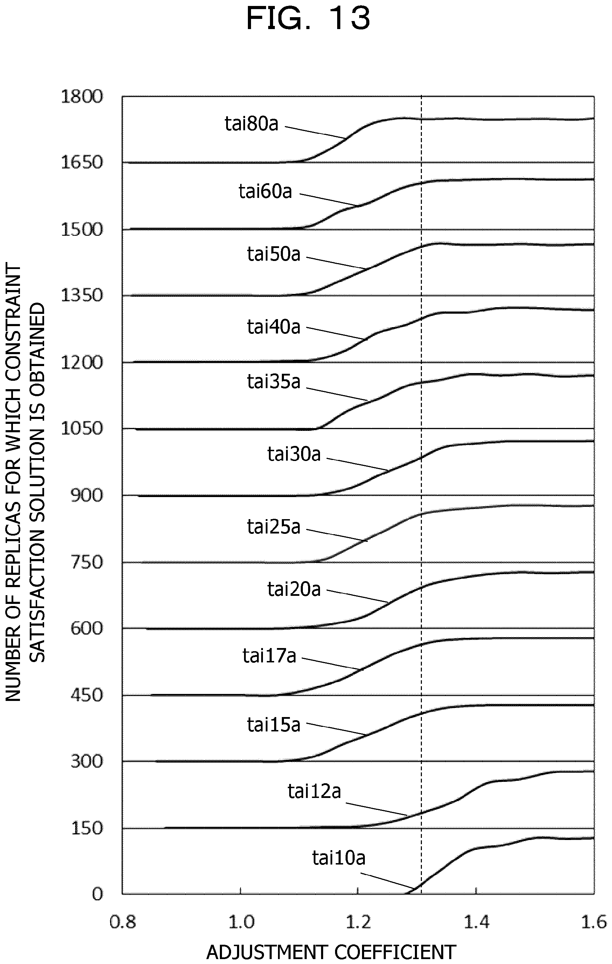

FIG. 13 is a diagram illustrating a relationship between a value of the adjustment coefficient and calculation results of the same type of instances having different problem sizes. FIG. 13 illustrates an exemplary case where the information processing system 20 according to the second embodiment obtains the expected value $\Delta^- C(x)$ of the decrease amount of C(x) for 12 taiNa (N represents a problem size) having different problem sizes, and then performs calculation by the replica exchange method by changing the value of the adjustment coefficient. The horizontal axis represents a value of the adjustment coefficient, and the vertical axis represents the number of replicas for which the constraint satisfaction solution is obtained among the 128 replicas. Note that, in FIG. 13, calculation results for individual instances are displayed in a manner of being shifted by 150 in the vertical axis direction.

In the example of FIG. 13, for example, by using an adjustment coefficient (approximately 1.3) to such an extent that the constraint satisfaction solution starts to be obtained in tai10a having the smallest problem size, it becomes possible to obtain the constraint satisfaction solution for the same type of 12 instances (tai) having different problem sizes.

As described above, at the time of obtaining an adjustment coefficient, the problem size of the problem to be calculated is reduced to search for an appropriate adjustment coefficient, and the actual problem is solved using the adjustment coefficient, whereby the adjustment coefficient search time may be significantly reduced.

At the time of obtaining an adjustment coefficient, it is preferable to use a model obtained by scaling down the problem to be optimized (e.g., the number of factories and the number of sites are reduced in the allocation of factories to sites). However, in a case where there is no statistically large bias in the flow matrix and the distance matrix even in an abstract problem, it is also possible to obtain the adjustment coefficient using a small-sized flow matrix and distance matrix configured by extracting appropriate rows and columns from each matrix.

Note that, while the method of setting the increase amount and the upper limit of the adjustment coefficient and increasing the adjustment coefficient until the adjustment coefficient reaches the upper limit is used in the example of determining the adjustment coefficient described above, a method of setting a decrease amount and a lower limit of the adjustment coefficient and decreasing the adjustment coefficient until the adjustment coefficient reaches the lower limit may be used.

(Exemplary QUBO Generation)

Next, exemplary QUBO generation based on the determined constraint coefficient $\alpha$ will be described.

The constraint term may be expressed as the equation (8) described above, for example. A quadratic polynomial by which $\alpha$ of the first term on the right side of the equation (8) is multiplied may be expressed as the following equation (14).

[Math. 14]

$$\sum_k \left( \sum_i x_{ik} - 1 \right)^2 = \sum_k \left( \left( \sum_i x_{ik} \right)^2 - 2 \sum_i x_{ik} + 1 \right) \quad (14)$$

In the equation (14), the quadratic term on the right side may be expressed as the following expression (15).

[Math. 15]

$$\left( \sum_i x_{ik} \right)^2 \rightarrow 2 \sum_j \sum_{i>j} x_{ik} x_{jk} + \sum_{i=j} x_{ik}^2 \quad (15)$$

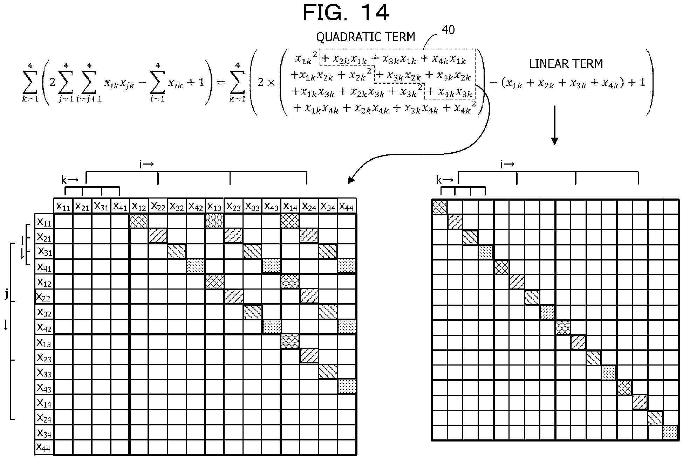

In the expression (15), the quadratic term is obtained by taking the sum of the state variables in the range of non-diagonal elements of the upper triangle (i > j) of the outer product of the state variable vector (see FIG. 14 to be described later) and multiplying it by 2 by the lower triangle. Furthermore, in the expression (15), $x_{ik}^2$ represents a diagonal element (see FIG. 14 to be described later). Since $x_{ik}$ represents a binary variable of 0 or 1, $x_{ik}^2 = x_{ik}$ holds. From the above, the equation (14) may be transformed into the following equation (16).

[Math. 16]

$$\sum_k \left( \sum_i x_{ik} - 1 \right)^2 = \sum_k \left( 2 \sum_j \sum_{i>j} x_{ik} x_{jk} - \sum_i x_{ik} + 1 \right) (16)$$

A quadratic polynomial by which $\beta$ of the second term on the right side of the equation (8) is multiplied may be expressed as the following equation (17) for a similar reason described above.

[Math. 17]

$$\sum_i \left( \sum_k x_{ik} - 1 \right)^2 = \sum_i \left( 2 \sum_l \sum_{k>l} x_{ik} x_{il} - \sum_k x_{ik} + 1 \right) (17)$$

As described below, $x_{ik} x_{jk}$ added to the quadratic term and the linear term in the equation (16) are expressed by matrices.

FIG. 14 is a diagram illustrating $x_{ik} x_{jk}$ added to the quadratic term and the linear term in the equation (16) by matrices. FIG. 14 illustrates an exemplary case where the problem size n is n = 4.

A product of two state variables in a region 40 is added to the quadratic term. In FIG. 14, a matrix element representing the product of the two state variables added to the quadratic term is indicated by different hatching for each value of k (= 1 to 4).

In FIG. 14, the linear term is indicated by different hatching for each value of k (= 1 to 4) as a diagonal element of the matrix.

As described below, $x_{ik} x_{il}$ added to the quadratic term and the linear term in the equation (17) are expressed by matrices.

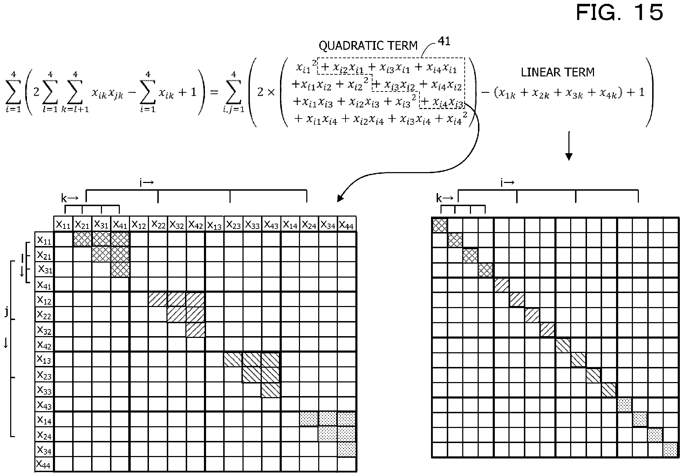

FIG. 15 is a diagram illustrating $x_{ik} x_{il}$ added to the quadratic term and the linear term in the equation (17) by matrices. FIG. 15 also illustrates an exemplary case where the problem size n is n = 4.

A product of two state variables in a region 41 is added to the quadratic term. In FIG. 15, a matrix element representing the product of the two state variables added to the quadratic term is indicated by different hatching for each value of i (= 1 to 4).

In FIG. 15, the linear term is indicated by different hatching for each value of i (= 1 to 4) as a diagonal element of the matrix.

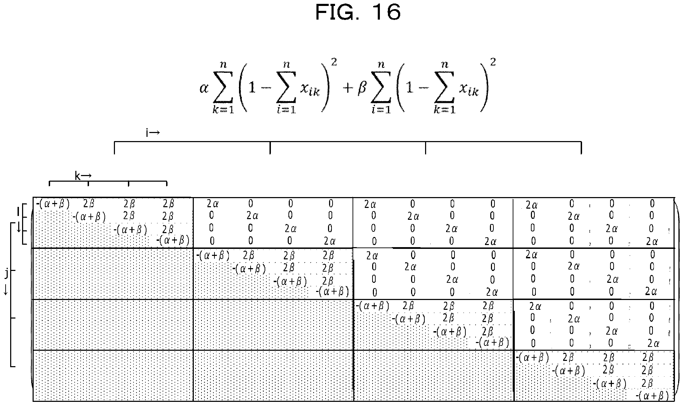

FIG. 16 is a diagram illustrating an example of the QUBO matrix of the constraint term.

When the results of FIGs. 14 and 15 are combined, the QUBO matrix of the constraint term is expressed as illustrated in FIG. 16. In the QUBO matrix with respect to the constraint term, a diagonal element is -($\alpha$ + $\beta$), and a diagonal element of each small matrix of the upper triangular portion (i > j) is 2$\alpha$. Furthermore, each element of the upper triangular portion in each of four diagonal small matrices is 2$\beta$. Note that it may be considered that $\alpha = \beta$ holds as described above.

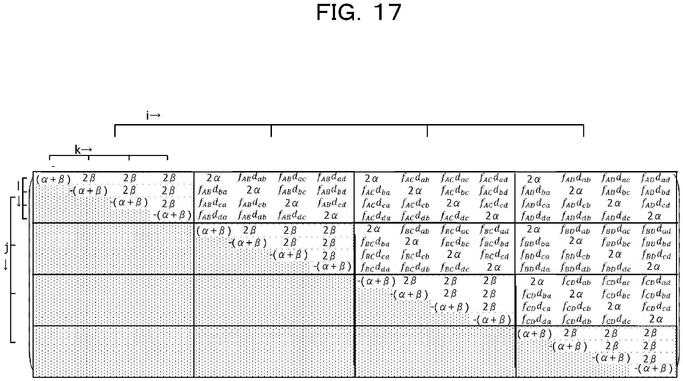

FIG. 17 is a diagram illustrating an example of the QUBO matrix of the entire energy function.

The QUBO matrix of the entire energy function in FIG. 17 is obtained by adding the QUBO matrix of the cost term illustrated in FIG. 7 and the QUBO matrix of the constraint term illustrated in FIG. 16.

The control unit 130 outputs such a QUBO matrix as information regarding the energy function, and sets it in the search unit 210.

According to the information processing system 20 of the second embodiment as described above, effects similar to those of the information processing system 10 of the first embodiment may be obtained. That is, it becomes possible to suppress occurrence of a large number of times of adjustment to obtain an appropriate constraint coefficient, and to shorten a time needed to determine the constraint coefficient.

(Third Embodiment)

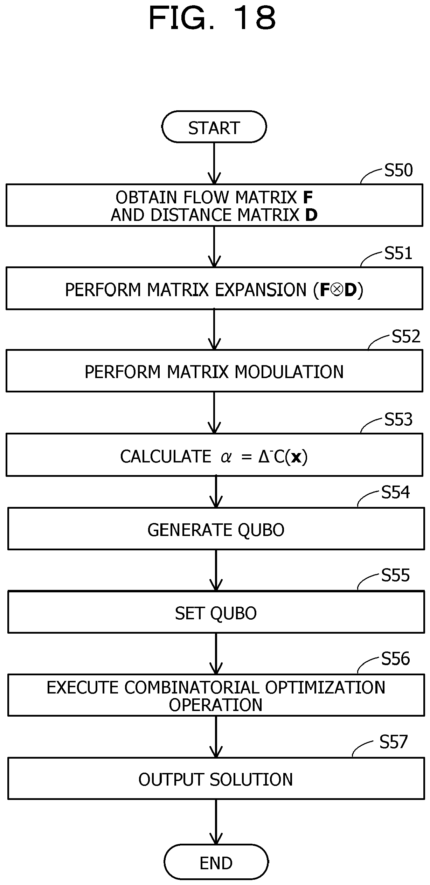

FIG. 18 is a flowchart illustrating a flow of an exemplary process of an information processing system according to a third embodiment.

Processing of steps S50 and S51 is the same as the processing of steps S1 and S2 illustrated in FIG. 6.

After the processing of step S51, a control unit 130 performs matrix modulation (step S52). In the processing of step S52, modulation of $Q_{ij}$ generated by a Kronecker product of a flow matrix F and a distance matrix D is performed. An example of the modulation will be described later.

After the processing of step S52, the control unit 130 calculates $\Delta^-C(x)$ based on $Q_{ij}$ after the modulation in a similar manner to the processing of step S3 illustrated in FIG. 6 (step S53). In the information processing system according to the third embodiment, an adjustment coefficient may be set to 1.0 and $\Delta^-C(x)$ may be set to a constraint coefficient $\alpha$ for a reason to be described later.

Processing of steps S54 to S57 is similar to the processing of steps S7 to S10 illustrated in FIG. 6.

(Matrix Modulation)

C'(x) in the following equation (18) is obtained by adding an optional constant C to the cost term C(x) expressed in the equation (2).

[Math. 18]

$$C'(\mathbf{x}) = \sum_{i<j} Q_{ij} x_i x_j + \sum_i h_i x_i + c + C \qquad (18)$$

In calculation of a combinatorial optimization problem, an optimal solution (optimal allocation in a case of a QAP) does not change even if the same constant C is regularly added to or subtracted from a cost term, and a value of the cost term in the optimal solution is only different by the constant C added to or subtracted from the cost term. Moreover, not only the optimal solution but also all solutions and their ranks (magnitude relationship) are naturally maintained.

Meanwhile, in the QAP, a matrix Q represented by the Kronecker product of the flow matrix F and the distance matrix D includes n × n small matrices $f_{ij}D$ as in the equation (9) described above. When any two allocation elements (factories, etc.) identified by i and j are considered, allocatable allocation destinations (sites, etc.) are all combinations of two allocation destinations. The small matrix $f_{ij}D$ represents a cost term corresponding to all combinations of two allocation destinations for any two allocation elements identified by i and j.

In a constraint satisfaction solution of the QAP, any one element $f_{ij}d_{kl}$ other than a diagonal element is selected from each of the small matrices $f_{ij}D$. That is, only a value of any one element $f_{ij}d_{kl}$ other than a diagonal element is added to the cost term of the constraint satisfaction solution from each of the small matrices $f_{ij}D$.

Thus, in terms of the constraint satisfaction solution, even if the same constant is added to or subtracted from all $f_{ij}d_{kl}$ included in the solution, the same optimal solution is obtained in a similar manner to the case where the constant C is regularly added to or subtracted from the cost term in a simple manner as described above. Furthermore, all solutions and their ranks are also maintained.

Therefore, in the matrix Q, the same solution (allocation) and cost term order are obtained in terms of the constraint satisfaction solution regardless of whether or not any same constant is added to or subtracted from each element $f_{ij}d_{kl}$ for each of $n(n - 1)/2$ small matrices $f_{ij}D$ including the valid elements described above. Such an operation of adding or subtracting any same constant to or from each element $f_{ij}d_{kl}$ corresponds to the modulation of the matrix Q.

Meanwhile, a small matrix $d_{kl}F$ obtained in a case where the Kronecker product is performed by switching the order of the flow matrix F and the distance matrix D represents a cost term corresponding to all combinations of two allocation elements for any two allocation destinations identified by k and I. However, since the Kronecker product is not commutative, elements of the small matrix $d_{kl}F$ do not constitute a small matrix in the matrix Q as expressed in the equation (9), and are allocated to each small matrix $f_{ij}D$ of the matrix Q one by one.

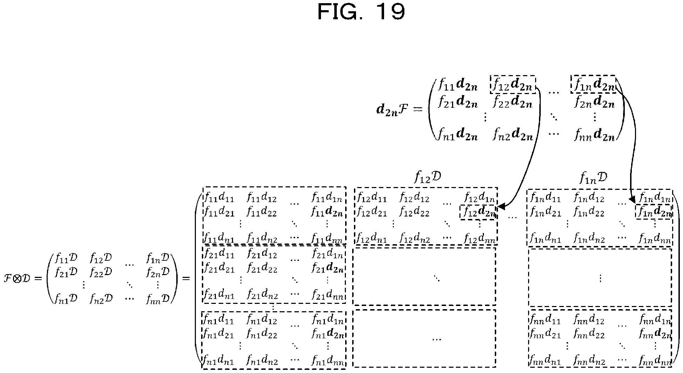

FIG. 19 is a diagram illustrating exemplary allocation of the elements of the small matrix $d_{kl}F$ to the small matrix $f_{ij}D$. FIG. 19 illustrates exemplary allocation of elements of $d_{2n}F$, which is an example of the small matrix $d_{kl}F$, to the small matrix $f_{ij}D$.

For example, an element $f_{12}d_{2n}$ of $d_{2n}F$ is allocated to a small matrix $f_{12}D$, and an element $f_{1n}d_{2n}$ of $d_{2n}F$ is allocated to a small matrix $f_{1n}D$.

In the constraint satisfaction solution of the QAP, in a similar manner to the case of the small matrix $f_{ij}D$, any one element $f_{ij}d_{kl}$ other than a diagonal element is selected from the small matrix $d_{kl}F$. That is, a value of any one element $f_{ij}d_{kl}$ other than a diagonal element of the small matrix $d_{kl}F$ is added to the cost term of the constraint satisfaction solution. Thus, in terms of the constraint satisfaction solution, even if the same constant is added to or subtracted from all $f_{ij}d_{kl}$ included in the solution, the same optimal solution is obtained in a similar manner to the case where the constant C is regularly added to or subtracted from the cost term in a simple manner as described above. Furthermore, all solutions and their ranks are also maintained. Note that, since the elements of the lower triangle of the small matrix $f_{ij}D$ are the same as the elements of the upper triangle, they **may not** be used (they may be treated as invalid elements).

Therefore, in a similar manner to the small matrix $f_{ij}D$, the same solution (allocation) and cost term order are obtained in terms of the constraint satisfaction solution regardless of whether or not any same constant is added to or subtracted from each element $f_{ij}d_{kl}$ for each of $n(n - 1)/2$ small matrices $d_{kl}F$ including valid elements. Such an operation of adding or subtracting any same constant to or from each element $f_{ij}d_{kl}$ of $d_{kl}F$ also corresponds to the modulation of the matrix Q.

By reducing the deviation of the value of $f_{ij}d_{kl}$ by those kinds of matrix modulation to smooth the solution space, it becomes possible to reduce the values of the constraint term to improve the solution search efficiency. This may be regarded as follows from a statistical point of view. The $f_{ij}d_{kl}$ originally having a different deviation for each instance sequence is subject to reduction of the deviation based on the matrix modulation, thereby being converted into another instance sequence having statistical properties similar to each other regardless of the original instance sequence and having the same solution as the original instance.

As described above, at the time of determining the constraint coefficient, the statistical properties may be made uniform by applying the matrix modulation to the instance to be calculated. As a result, it becomes possible to set the adjustment coefficient used to correct the statistical difference by the instance sequence used in the second embodiment to an almost constant value while reducing the sequence dependency of the instance.

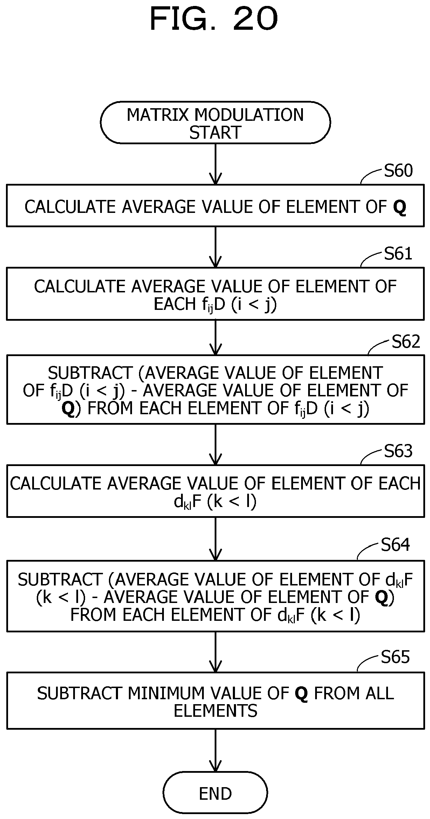

FIG. 20 is a flowchart illustrating an exemplary flow of the matrix modulation.

The control unit 130 calculates an average value of the elements of the matrix Q obtained by the Kronecker product of the flow matrix F and the distance matrix D (step S60). Furthermore, the control unit 130 calculates an average value of the elements of each small matrix $f_{ij}D$ (i < j) (step S61). Then, for each small matrix $f_{ij}D$ (i < j), the control unit 130 subtracts (the average value of the elements of the small matrix $f_{ij}D$ (i < j) - the average value of the elements of the matrix Q) from each element of the small matrix $f_{ij}D$ (i < j) (step S62). Note that, in a case where (the average value of the elements of the small matrix $f_{ij}D$ (i < j) - the average value of the elements of the matrix Q) is negative, the control unit 130 adds the difference value to each element of the small matrix $f_{ij}D$ (i < j).

Next, the control unit 130 calculates an average value of the elements of each small matrix $d_{kl}F$ (k < l) (step S63). Then, for each small matrix $d_{kl}F$ (k < l), the control unit 130 subtracts (the average value of the elements of the small matrix $d_{kl}F$ (k < l) - the average value of the elements of the matrix Q) from each element of the small matrix $d_{kl}F$ (k < l) (step S64). Note that, in a case where (the average value of the elements of the small matrix $d_{kl}F$ (k < l) - the average value of the elements of the matrix Q) is negative, the control unit 130 adds the difference value to each element of the small matrix $d_{kl}F$ (k < l).

Finally, the control unit 130 subtracts the minimum value in the matrix Q from all the elements of Q (step S65).

In the operation of the matrix modulation described above, the processing of step S62 corresponds to adding or subtracting a value in which the average value of the elements of each small matrix $f_{ij}D$ (i < j) matches the average value of the elements of the entire matrix Q to or from each element of each small matrix. Furthermore, the processing of step S64 corresponds to adding or subtracting a value in which the average value of the elements of each small matrix $d_{kl}F$ (k < l) matches the average value of the elements of the entire matrix Q to or from each small matrix $d_{kl}F$ (k < l).

Note that the order of the process described above is an example, and the order of the process may be appropriately changed.

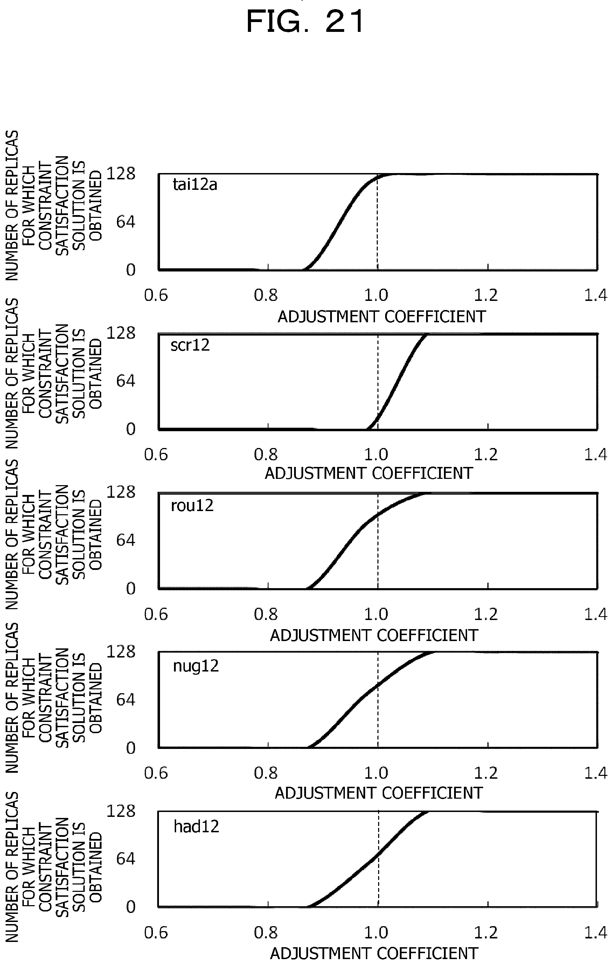

FIG. 21 is a diagram illustrating a relationship between a value of the adjustment coefficient and a calculation result of an instance in the case where the matrix modulation is used. FIG. 21 illustrates an exemplary case where an expected value $\Delta^- C(x)$ of a decrease amount of C(x) is obtained based on the matrix Q having been subject to the matrix modulation by the method described above, and then calculation is performed by a replica exchange method by changing the value of the adjustment coefficient. Instances to be calculated are tai12a, scr12, rou12, nug12, and had12 selected from a QAPLIB. The horizontal axis represents a value of the adjustment coefficient, and the vertical axis represents the number of replicas for which the constraint satisfaction solution is obtained among the 128 replicas.

In a case where the matrix Q having been subject to the matrix modulation by the method described above is used, it becomes possible to set the adjustment coefficient to approximately 1.0 for the five instances, as illustrated in FIG. 21. That is, as illustrated in FIG. 18, it becomes possible to use $\Delta^- C(x)$ as the constraint coefficient $\alpha$ directly without trial and error for determining the constraint coefficient o.

However, the adjustment coefficient becomes 1.0 in a case where the matrix modulation operation as illustrated in FIG. 20 is performed, and the adjustment coefficient may be a value different from 1.0 in a case where another matrix modulation operation is performed.

Furthermore, it is naturally possible to adjust the constraint coefficient $\alpha$ before obtaining the solution without adjusting the constraint coefficient $\alpha$ or again after obtaining the solution to aim for a better value of the cost term.

Note that the information processing of the first embodiment may be implemented by the processing unit 12 being caused to execute a program. Furthermore, the information processing of the second and third embodiments may be implemented by the CPU 101 being caused to execute a program. The program may be recorded in the computer-readable recording medium 113.

For example, it becomes possible to distribute the program by distributing the recording medium 113 in which the program is recorded. Furthermore, the program may be stored in another computer, and the program may be distributed through a network. For example, a computer may store (install) the program, which is recorded in the recording medium 113 or received from another computer, in a storage device such as the RAM 102, the HDD 103, or the like, read the program from the storage device, and execute it.

While one aspect of the information processing system, information processing method, and program according to the embodiments has been described above based on the embodiments, these are merely examples, and are not limited to the descriptions above.

## Claims

1. An information processing system configured to calculate a combinatorial optimization problem that includes a constraint condition based on an energy function of an Ising model represented by a sum of a cost term and a constraint term that corresponds to the constraint condition, the information processing system comprising:

   a processing unit configured to obtain problem information of the combinatorial optimization problem, calculate, based on the problem information, an expected value of a change amount of the cost term when transition from a solution that satisfies the constraint condition to a solution that does not satisfy the constraint condition occurs, determine a coefficient of the constraint term based on the expected value, and output information of the energy function using the determined coefficient; and
   a search unit configured to search for a ground state of the Ising model based on the output information.

2. The information processing system according to claim 1, wherein

   the combinatorial optimization problem includes a quadratic assignment problem, and
   the processing unit is configured to calculate a third matrix obtained by a Kronecker product of a first matrix and a second matrix that represent the problem information of the quadratic assignment problem, and calculate the expected value based on a first average value of an element included in the third matrix.

3. The information processing system according to claim 1, wherein
   the processing unit is configured to multiply the expected value by an adjustment coefficient to calculate the coefficient.

4. The information processing system according to claim 3, wherein the information processing system is further configured to repeat processing until the adjustment coefficient reaches an upper limit or a lower limit, the processing comprising:

the processing unit outputs the information of the energy function formulated using the coefficient obtained by the multiplication of the expected value by the adjustment coefficient;
the search unit outputs a search result of the ground state performed based on the information; and
the processing unit increases or decreases the adjustment coefficient, wherein

the processing unit determines the adjustment coefficient based on the search result when the adjustment coefficient reaches the upper limit or the lower limit.

5. The information processing system according to claim 2, wherein

the third matrix includes a plurality of small matrices obtained by a product of each element included in one matrix of the first matrix or the second matrix and the other matrix, and
in each of the plurality of small matrices, the processing unit adds or subtracts a difference value between the first average value and a second average value of an element included in each of the plurality of small matrices to or from a value of the element included in each of the small matrices so that the first average value and the second average value match.

6. An information processing method implemented by a computer of calculating a combinatorial optimization problem that includes a constraint condition by using an energy function of an Ising model represented by a sum of a cost term and a constraint term that corresponds to the constraint condition, the information processing method comprising:

obtaining problem information of the combinatorial optimization problem;
calculating, based on the problem information, an expected value of a change amount of the cost term when transition from a solution that satisfies the constraint condition to a solution that does not satisfy the constraint condition occurs;
determining a coefficient of the constraint term based on the expected value;
outputting information of the energy function using the determined coefficient; and
searching for a ground state of the Ising model based on the output information.

7. A program comprising instructions which, when executed by a computer which is used in an information processing system that calculates a combinatorial optimization problem that includes a constraint condition based on an energy function of an Ising model represented by a sum of a cost term and a constraint term that corresponds to the constraint condition, cause the computer to perform processing comprising:

obtaining problem information of the combinatorial optimization problem;
calculating, based on the problem information, an expected value of a change amount of the cost term when transition from a solution that satisfies the constraint condition to a solution that does not satisfy the constraint condition occurs;
determining a coefficient of the constraint term based on the expected value;
outputting, to a search unit of the information processing system, information of the energy function using the determined coefficient, the search unit being configured to search for a ground state of the Ising model based on the output information.

# FIG. 1

ENERGY FUNCTION: $E(x) = \boxed{C(x)} + \boxed{\alpha P(x)}$   $\alpha$ :CONSTRAINT COEFFICIENT

COST TERM   CONSTRAINT TERM

$$C(x) = \sum_{i<j} Q_{ij} x_i x_j \quad \text{(IN CASE OF QAP)}$$

**QAP PROBLEM INFORMATION**

i

| | 1 | 2 | ⋯ | n |
|---|---|---|---|---|
| 1 | $f_{1,1}$ | $f_{1,2}$ | ⋯ | $f_{1,n}$ |
| 2 | $f_{2,1}$ | $f_{2,2}$ | ⋯ | $f_{2,n}$ |
| ⋮ | ⋮ | ⋮ | ⋱ | ⋮ |
| n | $f_{n,1}$ | $f_{n,2}$ | ⋯ | $f_{n,n}$ |

j ↓

FLOW MATRIX **F**

k

| | i | ii | ⋯ | n |
|---|---|---|---|---|
| i | $d_{i,i}$ | $d_{i,ii}$ | ⋯ | $d_{i,n}$ |
| ii | $d_{ii,i}$ | $d_{ii,ii}$ | ⋯ | $d_{ii,n}$ |
| ⋮ | ⋮ | ⋮ | ⋱ | ⋮ |
| n | $d_{n,i}$ | $d_{n,ii}$ | ⋯ | $d_{n,n}$ |

l ↓

DISTANCE MATRIX **D**

i

| | 1 | 2 | ⋯ | n |
|---|---|---|---|---|
| i | $x_{1,i}$ | $x_{2,i}$ | ⋯ | $x_{n,i}$ |
| ii | $x_{1,ii}$ | $x_{2,ii}$ | ⋯ | $x_{n,ii}$ |
| ⋮ | ⋮ | ⋮ | ⋱ | ⋮ |
| n | $x_{1,n}$ | $x_{2,n}$ | ⋯ | $x_{n,n}$ |

k ↓

ALLOCATION MATRIX **x**

$$Q = \mathcal{F} \otimes \mathcal{D} = \begin{pmatrix} f_{1,1}\mathcal{D} & f_{1,2}\mathcal{D} & \cdots & f_{1,n}\mathcal{D} \\ f_{2,1}\mathcal{D} & f_{2,2}\mathcal{D} & \cdots & f_{2,n}\mathcal{D} \\ \vdots & \vdots & \ddots & \vdots \\ f_{n,1}\mathcal{D} & f_{n,2}\mathcal{D} & \cdots & f_{n,n}\mathcal{D} \end{pmatrix} = \begin{pmatrix} q_{1,1} & q_{1,2} & \cdots & q_{1,n^2} \\ q_{2,1} & q_{2,2} & \cdots & q_{2,n^2} \\ \vdots & \vdots & \ddots & \vdots \\ q_{n^2,1} & q_{n^2,2} & \cdots & q_{n^2,n^2} \end{pmatrix}$$

CALCULATE EXPECTED VALUE Δ⁻C(x) OF CHANGE AMOUNT OF C(x) WHEN TRANSITION FROM CONSTRAINT SATISFACTION SOLUTION TO CONSTRAINT VIOLATION SOLUTION OCCURS

DETERMINE $\alpha$ BASED ON Δ⁻C(x)

ex. $\alpha = \Delta^{-}C(x)$

ex. $\Delta^{-}C(x) = \dfrac{2}{n^2(n+1)}S$   $S = \sum_{s=1}^{N} q_s$

INFORMATION PROCESSING SYSTEM ⌐10

STORAGE UNIT ⌐11

PROCESSING UNIT ⌐12

SEARCH UNIT ⌐13

# FIG. 2

# FIG. 3

**20**

**INFORMATION PROCESSING DEVICE** **100**

| STORAGE UNIT **120** | CONTROL UNIT **130** | SOLUTION OUTPUT UNIT **140** |

**OPTIMIZATION DEVICE** **200**

SEARCH UNIT **210**

# FIG. 4

CONSTRAINT TERM:
$$\alpha \sum_{k=1}^{n} \left(1 - \sum_{i=1}^{n} x_{ik}\right)^2 + \beta \sum_{i=1}^{n} \left(1 - \sum_{k=1}^{n} x_{ik}\right)^2$$

STATE:
CONSTRAINT
VIOLATION eg

| | | |
|---|---|---|
| 0 | 1 |
| 1 | 0 |

1: 0
CONSTRAINT
SATISFACTION

| | | |
|---|---|---|
| 0 | 0 |
| 1 | 0 |

2: $\alpha + \beta$
CONSTRAINT
VIOLATION

| | | |
|---|---|---|
| 0 | 0 |
| 0 | 0 |

3: $2(\alpha + \beta)$
CONSTRAINT
VIOLATION

| | | |
|---|---|---|
| 1 | 0 |
| 0 | 0 |

4: $\alpha + \beta$
CONSTRAINT
VIOLATION

| | | |
|---|---|---|
| 1 | 0 |
| 0 | 1 |

5: 0
CONSTRAINT
SATISFACTION

FIG. 5

# FIG. 6

```
          ┌─────────────┐
          │    START    │
          └──────┬──────┘
                 │                    ⌐ S1
    ┌────────────▼─────────────────────┐
    │ OBTAIN FLOW MATRIX F AND DISTANCE │
    │            MATRIX D               │
    └────────────┬─────────────────────┘
                 │                    ⌐ S2
    ┌────────────▼─────────────────────┐
    │  PERFORM MATRIX EXPANSION (F⊗D)   │
    └────────────┬─────────────────────┘
                 │                    ⌐ S3
    ┌────────────▼─────────────────────┐
    │        CALCULATE Δ-C(x)           │
    └────────────┬─────────────────────┘
                 │                    ⌐ S4              NO
    ┌────────────▼─────────────────────┐        ┌──────────────────────┐
    <  HAS ADJUSTMENT COEFFICIENT       >────────▶                      │  ⌐ S5
    <     BEEN DETERMINED?              >        │ DETERMINE ADJUSTMENT  │
    └────────────┬─────────────────────┘        │     COEFFICIENT       │
               YES                              └──────────┬───────────┘
                 │◀──────────────────────────────────────┘
                 │                    ⌐ S6
    ┌────────────▼─────────────────────┐
    │ CALCULATE CONSTRAINT COEFFICIENT  │
    │   ( α = Δ-C(x) × ADJUSTMENT       │
    │         COEFFICIENT)              │
    └────────────┬─────────────────────┘
                 │                    ⌐ S7
    ┌────────────▼─────────────────────┐
    │          GENERATE QUBO            │
    └────────────┬─────────────────────┘
                 │                    ⌐ S8
    ┌────────────▼─────────────────────┐
    │            SET QUBO               │
    └────────────┬─────────────────────┘
                 │                    ⌐ S9
    ┌────────────▼─────────────────────┐
    │    EXECUTE COMBINATORIAL          │
    │    OPTIMIZATION OPERATION         │
    └────────────┬─────────────────────┘
                 │                    ⌐ S10
    ┌────────────▼─────────────────────┐
    │        OUTPUT SOLUTION            │
    └────────────┬─────────────────────┘
                 │
          ┌──────▼──────┐
          │     END     │
          └─────────────┘
```

# FIG. 7

# FIG. 8

**x**

|  | A | B | C | D |
|---|---|---|---|---|
| a | x₁₁ | x₁₂ | x₁₃ | x₁₄ |
| b | x₂₁ | x₂₂ | x₂₃ | x₂₄ |
| c | x₃₁ | x₃₂ | x₃₃ | x₃₄ |
| d | x₄₁ | x₄₂ | x₄₃ | x₄₄ |

$i \rightarrow$

SELECTION OF SIX $q_{ij}$

$j \downarrow$

| | $x_{11}$ | $x_{21}$ | $x_{31}$ | $x_{41}$ | $x_{12}$ | $x_{22}$ | $x_{32}$ | $x_{42}$ | $x_{13}$ | $x_{23}$ | $x_{33}$ | $x_{43}$ | $x_{14}$ | $x_{24}$ | $x_{34}$ | $x_{44}$ |
|---|---|---|---|---|---|---|---|---|---|---|---|---|---|---|---|---|
| $x_{11}$ | | | | | | 4 | 8 | 4 | | 6 | 12 | 6 | | 2 | 4 | 2 |
| $x_{21}$ | | | | | 4 | | 12 | 24 | 6 | | 18 | 36 | 2 | | 6 | 12 |
| $x_{31}$ | | | | | 8 | 12 | | 20 | 12 | 18 | | 30 | 4 | 6 | | 10 |
| $x_{41}$ | | | | | 4 | 24 | 20 | | 6 | 36 | 30 | | 2 | 12 | 10 | |
| $x_{12}$ | | | | | | | | | | 8 | 16 | 8 | | 2 | 4 | 2 |
| $x_{22}$ | | | | | | | | | 8 | | 24 | 48 | 2 | | 6 | 12 |
| $x_{32}$ | | | | | | | | | 16 | 24 | | 40 | 4 | 6 | | 10 |
| $x_{42}$ | | | | | | | | | 8 | 48 | 40 | | 2 | 12 | 10 | |
| $x_{13}$ | | | | | | | | | | | | | | 16 | 32 | 16 |
| $x_{23}$ | | | | | | | | | | | | | 16 | | 48 | 96 |
| $x_{33}$ | | | | | | | | | | | | | 32 | 48 | | 80 |
| $x_{43}$ | | | | | | | | | | | | | 16 | 96 | 80 | |
| $x_{14}$ | | | | | | | | | | | | | | | | |
| $x_{24}$ | | | | | | | | | | | | | | | | |
| $x_{34}$ | | | | | | | | | | | | | | | | |
| $x_{44}$ | | | | | | | | | | | | | | | | |

CONSTRAINT SATISFACTION SOLUTION

|  | A | B | C | D |
|---|---|---|---|---|
| a | 0 | 0 | 1 | 0 |
| b | 0 | 1 | 0 | 0 |
| c | 1 | 0 | 0 | 0 |
| d | 0 | 0 | 0 | 1 |

$x_{13}$ IS FLIPPED

$i \rightarrow$

DESELECTION OF THREE $q_{ij}$

$j \downarrow$

| | $x_{11}$ | $x_{21}$ | $x_{31}$ | $x_{41}$ | $x_{12}$ | $x_{22}$ | $x_{32}$ | $x_{42}$ | $x_{13}$ | $x_{23}$ | $x_{33}$ | $x_{43}$ | $x_{14}$ | $x_{24}$ | $x_{34}$ | $x_{44}$ |
|---|---|---|---|---|---|---|---|---|---|---|---|---|---|---|---|---|
| $x_{11}$ | | | | | | 4 | 8 | 4 | | 6 | 12 | 6 | | 2 | 4 | 2 |
| $x_{21}$ | | | | | 4 | | 12 | 24 | 6 | | 18 | 36 | 2 | | 6 | 12 |
| $x_{31}$ | | | | | 8 | 12 | | 20 | 12 | 18 | | 30 | 4 | 6 | | 10 |
| $x_{41}$ | | | | | 4 | 24 | 20 | | 6 | 36 | 30 | | 2 | 12 | 10 | |
| $x_{12}$ | | | | | | | | | | 8 | 16 | 8 | | 2 | 4 | 2 |
| $x_{22}$ | | | | | | | | | 8 | | 24 | 48 | 2 | | 6 | 12 |
| $x_{32}$ | | | | | | | | | 16 | 24 | | 40 | 4 | 6 | | 10 |
| $x_{42}$ | | | | | | | | | 8 | 48 | 40 | | 2 | 12 | 10 | |
| $x_{13}$ | | | | | | | | | | | | | | 16 | 32 | 16 |
| $x_{23}$ | | | | | | | | | | | | | 16 | | 48 | 96 |
| $x_{33}$ | | | | | | | | | | | | | 32 | 48 | | 80 |
| $x_{43}$ | | | | | | | | | | | | | 16 | 96 | 80 | |
| $x_{14}$ | | | | | | | | | | | | | | | | |
| $x_{24}$ | | | | | | | | | | | | | | | | |
| $x_{34}$ | | | | | | | | | | | | | | | | |
| $x_{44}$ | | | | | | | | | | | | | | | | |

CONSTRAINT VIOLATION SOLUTION

|  | A | B | C | D |
|---|---|---|---|---|
| a | 0 | 0 | 0 | 0 |
| b | 0 | 1 | 0 | 0 |
| c | 1 | 0 | 0 | 0 |
| d | 0 | 0 | 0 | 1 |

# FIG. 9

```
                    ┌─────────────┐
                    │    START    │
                    └──────┬──────┘
                           │              ┌S20
                    ┌──────▼───────────────────┐
                    │ OBTAIN FLOW MATRIX F AND  │
                    │    DISTANCE MATRIX D      │
                    └──────┬────────────────────┘
                           │              ┌S21
                    ┌──────▼───────────────────┐
                    │ PERFORM MATRIX EXPANSION  │
                    │         (F⊗D)             │
                    └──────┬────────────────────┘
                           │              ┌S22
                    ┌──────▼───────────────────┐
                    │  SET CONSTRAINT COEFFICIENT│
                    └──────┬────────────────────┘
                           │              ┌S23
                    ┌──────▼───────────────────┐
                    │      GENERATE QUBO        │
                    └──────┬────────────────────┘
                           │              ┌S24
                    ┌──────▼───────────────────┐
                    │        SET QUBO           │
                    └──────┬────────────────────┘
                           │              ┌S25
                    ┌──────▼───────────────────┐
                    │  EXECUTE COMBINATORIAL    │
                    │  OPTIMIZATION OPERATION   │
                    └──────┬────────────────────┘
```

IS CONSTRAINT CONDITION SATISFIED? — S27

UPDATE CONSTRAINT COEFFICIENT — S30

OUTPUT ALLOCATION MATRIX x — S26

OUTPUT VALUE OF COST TERM — S28

IS CONDITION SATISFIED? — S29

OUTPUT SOLUTION — S31

END

# FIG. 10

# FIG. 11

# FIG. 12

```
       ┌─────────────────────────────────┐
       │    ADJUSTMENT COEFFICIENT        │
       │ DETERMINATION PROCESS START      │
       └─────────────────────────────────┘
                      │                        S40
                      ▼
       ┌─────────────────────────────────┐
       │ SET ADJUSTMENT COEFFICIENT       │
       │ INITIAL VALUE, INCREASE AMOUNT,  │
       │ AND UPPER LIMIT                  │
       └─────────────────────────────────┘
                      │
                      ▼
       ┌─────────────────────────────────┐   S41
       │ CALCULATE CONSTRAINT COEFFICIENT │
       │ ( α = Δ⁻C(x) × ADJUSTMENT        │
       │       COEFFICIENT)               │
       └─────────────────────────────────┘
                      │
                      ▼                        S42
       ┌─────────────────────────────────┐
       │         GENERATE QUBO            │
       └─────────────────────────────────┘
                      │                        S43                 S47
                      ▼                             ┌──────────────────────┐
       ┌─────────────────────────────────┐          │ INCREASE ADJUSTMENT  │
       │           SET QUBO              │          │     COEFFICIENT      │
       └─────────────────────────────────┘          └──────────────────────┘
                      │                        S44
                      ▼
       ┌─────────────────────────────────┐
       │   EXECUTE COMBINATORIAL         │
       │   OPTIMIZATION OPERATION        │
       └─────────────────────────────────┘
                      │                        S45
                      ▼
       ┌─────────────────────────────────┐
       │   OUTPUT ALLOCATION MATRIX x     │
       └─────────────────────────────────┘
                      │                        S46
                      ▼                            NO
       ⟨ IS ADJUSTMENT COEFFICIENT ⟩ ──────────────┘
       ⟨ UPPER LIMIT IS REACHED?    ⟩
                      │ YES
                      ▼                        S48
       ┌─────────────────────────────────┐
       │ DETERMINE OPTIMAL ADJUSTMENT     │
       │        COEFFICIENT               │
       └─────────────────────────────────┘
                      │
                      ▼
                 ┌─────────┐
                 │   END   │
                 └─────────┘
```

# FIG. 13

# FIG. 14

QUADRATIC TERM 40

$$\sum_{k=1}^{4}\left(2\sum_{j=1}^{4}\sum_{i=j+1}^{4} x_{ik}x_{jk} - \sum_{i=1}^{4} x_{ik} + 1\right) = \sum_{k=1}^{4}\left(2 \times \begin{pmatrix} x_{1k}^2 + x_{2k}x_{1k} + x_{3k}x_{1k} + x_{4k}x_{1k} \\ +x_{1k}x_{2k} + x_{2k}^2 + x_{3k}x_{2k} + x_{4k}x_{2k} \\ +x_{1k}x_{3k} + x_{2k}x_{3k} + x_{3k}^2 + x_{4k}x_{3k} \\ + x_{1k}x_{4k} + x_{2k}x_{4k} + x_{3k}x_{4k} + x_{4k}^2 \end{pmatrix} - (x_{1k} + x_{2k} + x_{3k} + x_{4k}) + 1\right)$$

LINEAR TERM

FIG. 15

$$\sum_{i=1}^{4}\left(2\sum_{l=1}^{4}\sum_{k=l+1}^{4}x_{ik}x_{jk}-\sum_{i=1}^{4}x_{ik}+1\right)=\sum_{i,j=1}^{4}\left(2\times\begin{pmatrix}x_{i1}^{2}+x_{i2}x_{i1}+x_{i3}x_{i1}+x_{i4}x_{i1}\\+x_{i1}x_{i2}+x_{i2}^{2}+x_{i3}x_{i2}+x_{i4}x_{i2}\\+x_{i1}x_{i3}+x_{i2}x_{i3}+x_{i3}^{2}+x_{i4}x_{i3}\\+x_{i1}x_{i4}+x_{i2}x_{i4}+x_{i3}x_{i4}+x_{i4}^{2}\end{pmatrix}-(x_{1k}+x_{2k}+x_{3k}+x_{4k})+1\right)$$

QUADRATIC TERM 41

LINEAR TERM

FIG. 16

$$\alpha \sum_{k=1}^{n}\left(1-\sum_{i=1}^{n} x_{ik}\right)^{2} + \beta \sum_{i=1}^{n}\left(1-\sum_{k=1}^{n} x_{ik}\right)^{2}$$

# FIG. 17

# FIG. 18

START

OBTAIN FLOW MATRIX **F**
AND DISTANCE MATRIX **D** ⟍S50

PERFORM MATRIX EXPANSION (**F**⊗**D**) ⟍S51

PERFORM MATRIX MODULATION ⟍S52

CALCULATE $\alpha = \Delta^- C(\mathbf{x})$ ⟍S53

GENERATE QUBO ⟍S54

SET QUBO ⟍S55

EXECUTE COMBINATORIAL OPTIMIZATION
OPERATION ⟍S56

OUTPUT SOLUTION ⟍S57

END

FIG. 19

$$d_{2n}\mathcal{F} = \begin{pmatrix} f_{11}d_{2n} & \boxed{f_{12}d_{2n}} & \cdots & \boxed{f_{1n}d_{2n}} \\ f_{21}d_{2n} & f_{22}d_{2n} & & f_{2n}d_{2n} \\ \vdots & & \ddots & \vdots \\ f_{n1}d_{2n} & f_{n2}d_{2n} & \cdots & f_{nn}d_{2n} \end{pmatrix}$$

$$\mathcal{F}\otimes\mathcal{D} = \begin{pmatrix} f_{11}\mathcal{D} & f_{12}\mathcal{D} & \cdots & f_{1n}\mathcal{D} \\ f_{21}\mathcal{D} & f_{22}\mathcal{D} & \ddots & f_{2n}\mathcal{D} \\ \vdots & & \ddots & \vdots \\ f_{n1}\mathcal{D} & f_{n2}\mathcal{D} & \cdots & f_{nn}\mathcal{D} \end{pmatrix}$$

# FIG. 20

MATRIX MODULATION
START

S60
CALCULATE AVERAGE VALUE OF ELEMENT OF **Q**

S61
CALCULATE AVERAGE VALUE OF ELEMENT OF
EACH $f_{ij}D$ (i < j)

S62
SUBTRACT (AVERAGE VALUE OF ELEMENT
OF $f_{ij}D$ (i < j) - AVERAGE VALUE OF ELEMENT OF
**Q**) FROM EACH ELEMENT OF $f_{ij}D$ (i < j)

S63
CALCULATE AVERAGE VALUE OF ELEMENT OF EACH
$d_{kl}F$ (k < l)

S64
SUBTRACT (AVERAGE VALUE OF ELEMENT OF $d_{kl}F$
(k < l) - AVERAGE VALUE OF ELEMENT OF **Q**)
FROM EACH ELEMENT OF $d_{kl}F$ (k < l)

S65
SUBTRACT MINIMUM VALUE OF **Q** FROM ALL
ELEMENTS

END

# FIG. 21

Europäisches
Patentamt
European
Patent Office
Office européen
des brevets

# EUROPEAN SEARCH REPORT

Application Number

EP 24 17 3846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 968 240 A1 (FUJITSU LTD [JP]) 16 March 2022 (2022-03-16) * page 2 - page 19 * | 1-7 | INV. G06N5/01 G06N7/01 |
| A,D | JP 2004 110831 A (GLOBAL NUCLEAR FUEL AMERICAS) 8 April 2004 (2004-04-08) * the whole document * | 1-7 | ADD. G06N10/60 |
| A,D | WO 2021/044516 A1 (NEC CORP [JP]; TOKYO INST TECH [JP]) 11 March 2021 (2021-03-11) * the whole document * | 1-7 | |

TECHNICAL FIELDS
SEARCHED      (IPC)

G06N

The present search report has been drawn up for all claims

| Place of search | Date of completion of the search | Examiner |
|---|---|---|
| The Hague | 15 October 2024 | Cilia, Elisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 3846

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2024

| Patent document cited in search report | | Publication date | Patent family member(s) | | Publication date |
|---|---|---|---|---|---|
| EP 3968240 | A1 | 16-03-2022 | CN | 114168898 A | 11-03-2022 |
| | | | EP | 3968240 A1 | 16-03-2022 |
| | | | JP | 2022047362 A | 24-03-2022 |
| | | | US | 2022083625 A1 | 17-03-2022 |
| JP 2004110831 | A | 08-04-2004 | EP | 1400905 A1 | 24-03-2004 |
| | | | JP | 2004110831 A | 08-04-2004 |
| | | | KR | 20040025647 A | 24-03-2004 |
| | | | MX | PA03008332 A | 24-03-2004 |
| | | | TW | I338202 B | 01-03-2011 |
| | | | US | 2004059696 A1 | 25-03-2004 |
| WO 2021044516 | A1 | 11-03-2021 | EP | 4027274 A1 | 13-07-2022 |
| | | | JP | 7336712 B2 | 01-09-2023 |
| | | | JP | WO2021044516 A1 | 11-03-2021 |
| | | | US | 2022292235 A1 | 15-09-2022 |
| | | | WO | 2021044516 A1 | 11-03-2021 |

EPO FORM P0459

For more details about this annex : see Official Journal of the European Patent Office, No. 12/82

## REFERENCES CITED IN THE DESCRIPTION

**Patent documents cited in the description**

- WO 2021044516 A

- JP 2004110831 A